(19) Europäisches Patentamt
European Patent Office
Office européen des brevets

(11) **EP 4 621 603 A1**

(12) **EUROPEAN PATENT APPLICATION**
published in accordance with Art. 153(4) EPC

(43) Date of publication:
**24.09.2025  Bulletin 2025/39**

(21) Application number: **23905925.6**

(22) Date of filing: **19.12.2023**

(51) International Patent Classification (IPC):
**G06F 16/9535** (2019.01)

(86) International application number:
**PCT/CN2023/139738**

(87) International publication number:
**WO 2024/131762 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **19.12.2022  CN 202211634087**

(71) Applicant: **Huawei Technologies Co., Ltd.
Shenzhen, Guangdong 518129 (CN)**

(72) Inventors:
• **LIU, Weiwen
  Shenzhen, Guangdong 518129 (CN)**
• **XI, Yunjia
  Shenzhen, Guangdong 518129 (CN)**
• **TANG, Ruiming
  Shenzhen, Guangdong 518129 (CN)**
• **LI, Shuai
  Shanghai 200240 (CN)**
• **ZHANG, Weinan
  Shanghai 200240 (CN)**
• **YU, Yong
  Shanghai 200240 (CN)**

(74) Representative: **Gill Jennings & Every LLP
The Broadgate Tower
20 Primrose Street
London EC2A 2ES (GB)**

(54) **RECOMMENDATION METHOD AND RELATED DEVICE**

(57)    Embodiments of this application disclose a recommendation method. The method in embodiments of this application may be applied to a scenario such as a movie recommendation scenario or a game recommendation scenario in which an item is recommended to a user. The method includes: obtaining preliminary recommendation ranking indicating a plurality of to-be-recommended items; and obtaining ranking of a plurality of historical items related to historical behavior of a user, and updating the preliminary recommendation ranking based on a second feature obtained based on the ranking of the plurality of historical items. Because the second feature reflects a preference degree of the user for a category to which the plurality of historical items belong, a third sequence determined based on the second feature can provide personalized and diversified item recommendation for the user.

```
┌─────────────────────────────────────────────┐
│         Obtain a first sequence              │── 501
└─────────────────────────────────────────────┘
                      │
                      ▼
┌─────────────────────────────────────────────┐
│ Obtain a plurality of first features based   │── 502
│         on the first sequence                │
└─────────────────────────────────────────────┘
                      │
                      ▼
┌─────────────────────────────────────────────┐
│         Obtain a second sequence             │── 503
└─────────────────────────────────────────────┘
                      │
                      ▼
┌─────────────────────────────────────────────┐
│ Obtain a second feature based on the         │── 504
│         second sequence                      │
└─────────────────────────────────────────────┘
                      │
                      ▼
┌─────────────────────────────────────────────┐
│ Re-rank the first sequence based on the      │── 505
│ plurality of first features and the          │
│ second feature to obtain the third sequence  │
└─────────────────────────────────────────────┘
```

FIG. 5

EP 4 621 603 A1

**Description**

This application claims priority to Chinese Patent Application No. 202211634087.9, filed with the China National Intellectual Property Administration on December 19, 2022 and entitled "RECOMMENDATION METHOD AND RELATED DEVICE", which is incorporated herein by reference in its entirety.

## TECHNICAL FIELD

This application relates to the field of artificial intelligence, and in particular, to a recommendation method and a related device.

## BACKGROUND

Artificial intelligence (artificial intelligence, AI) is a theory, a method, a technology, and an application system that simulates, extends, and expands human intelligence by using a digital computer or a machine controlled by a digital computer, to perceive an environment, obtain knowledge, and achieve an optimal result by using the knowledge. In other words, artificial intelligence is a branch of computer science and attempts to understand essence of intelligence and produce a new intelligent machine that can react in a similar manner to human intelligence. Artificial intelligence is to research design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

Currently, a recommendation system has undergone years of development, has become a standard configuration of Internet-based products, and also is one of branches of successful AI implementation. The recommendation system plays an important role in popular applications such as e-commerce, information, music, and short videos. When massive data information is overloaded, the recommendation system is used to proactively and quickly recommend, to a user from massive data, a recommendation result (for example, a commodity, a movie, or a piece of music) that meets user needs. However, most existing recommendation systems optimize only accuracy of recommendation results, but ignore diversity of the recommendation results.

Therefore, how to provide diversified recommendation results for the user is an urgent technical problem to be resolved.

## SUMMARY

Embodiments of this application provide a recommendation method and a related device, which can provide personalized and diversified item recommendation for a user. The method may be applied to a scenario such as a movie recommendation scenario or a game recommendation scenario in which an item is recommended to the user.

A first aspect of an embodiment of this application provides a recommendation method. The method may be applied to a scenario such as a movie recommendation scenario or a game recommendation scenario in which an item is recommended to a user. The method may be performed by a recommendation device, or may be performed by a component (for example, a processor, a chip, or a chip system) in the recommendation device. The method includes: obtaining a first sequence, where the first sequence represents preliminary recommendation ranking of a plurality of to-be-recommended items; obtaining a plurality of first features based on the first sequence, where each of the plurality of first features represents an association relationship between a to-be-recommended item corresponding to each first feature and another to-be-recommended item; obtaining a second sequence, where the second sequence represents ranking of a plurality of historical items related to historical behavior of a user; obtaining a second feature based on the second sequence, where the second feature represents a preference degree of the user for a category to which the plurality of historical items belong; and re-ranking the first sequence based on the plurality of first features and the second feature to obtain a third sequence, where the third sequence is used to recommend an item to the user.

In this embodiment of this application, the ranking of the plurality of historical items related to the historical behavior of the user is obtained, and the preliminary recommendation ranking is updated based on the second feature obtained based on the ranking of the plurality of historical items. Because the second feature reflects the preference degree of the user for the category to which the plurality of historical items belong, the third sequence determined based on the second feature can provide personalized and diversified item recommendation for the user.

Optionally, in a possible implementation of the first aspect, the step of obtaining the second feature based on the second sequence includes: splitting the second sequence into a plurality of subsequences based on the category of the plurality of historical items; obtaining a plurality of first subfeatures of the plurality of subsequences, where each of the plurality of first subfeatures represents an association relationship between at least two historical items in a subsequence corresponding to each first subfeature, and the plurality of subsequences one-to-one correspond to the plurality of first subfeatures; obtaining a plurality of second subfeatures based on the plurality of first subfeatures, where each of the plurality of second subfeatures represents an association relationship between a subsequence corresponding to each second subfeature and another subsequence, and the plurality of first subfeatures one-to-one correspond to the plurality of second subfeatures; and concatenating and performing dimension reduction processing on the plurality of second subfeatures to obtain the second feature.

In this possible implementation, the association relationship between the subsequences is obtained by using the association relationship between the historical items, and then the historical behavior of the user is considered for the association relationship between the subsequences, to provide a recommendation result that conforms to a habit of the user.

Optionally, in a possible implementation of the first aspect, the step of obtaining the second feature based on the second sequence includes: obtaining a third feature based on the second sequence, where the third feature represents an association relationship between categories to which historical items in the second sequence belong; and performing dimension reduction processing on the third feature to obtain the second feature.

In this possible implementation, the second feature is obtained by using the association relationship between the categories to which the historical items belong. Therefore, the second feature may represent a preference degree of the user for an item category. In a subsequent re-ranking process, preference of the user for the item category is considered, to provide diversified recommendation results for the user.

Optionally, in a possible implementation of the first aspect, the step further includes: obtaining a plurality of fourth features of the plurality of to-be-recommended items, where the plurality of fourth features represent diversity of the plurality of to-be-recommended items, and the plurality of to-be-recommended items one-to-one correspond to the plurality of fourth features; and re-ranking the first sequence based on the plurality of first features and the second feature to obtain the third sequence includes: obtaining a plurality of scores based on the plurality of first features, the second feature, and the plurality of fourth features, where the plurality of scores represent scores of re-ranking of the plurality of to-be-recommended items, and the plurality of scores one-to-one correspond to the plurality of to-be-recommended items; and re-ranking the plurality of to-be-recommended items based on the plurality of scores to obtain the third sequence.

In this possible implementation, in a process of obtaining the scores of the to-be-recommended items, the association relationship between the plurality of to-be-recommended items is considered, and the diversity of the to-be-recommended items is also considered, so that personalized and diversified recommendation results can be provided for the user through score ranking.

Optionally, in a possible implementation of the first aspect, the step of obtaining the plurality of scores based on the plurality of first features, the second feature, and the plurality of fourth features includes: obtaining a plurality of fifth features based on the second feature and the plurality of fourth features, where the plurality of fifth features represent personalized diversity features of the plurality of to-be-recommended items, and the plurality of fourth features one-to-one correspond to the plurality of fifth features; and obtaining the plurality of scores based on the plurality of first features and the plurality of fifth features.

In this possible implementation, the fifth features indicating personalized diversity are first obtained, and then scores that may represent personalized diversity are provided based on personalization features (that is, the first features), to provide personalized and diversified recommendation results for the user.

Optionally, in a possible implementation of the first aspect, the step of obtaining the plurality of scores based on the plurality of first features and the plurality of fifth features includes: concatenating the plurality of first features and the plurality of fifth features to obtain a plurality of sixth features, where the plurality of first features, the plurality of fifth features, and the plurality of sixth features one-to-one correspond to each other; and performing dimension reduction processing on the plurality of sixth features to obtain the plurality of scores.

In this possible implementation, in an example of obtaining scores, the first features and the fifth features are first concatenated, and then dimension reduction processing is performed on the concatenated features to obtain the scores that represent personalized diversity.

Optionally, in a possible implementation of the first aspect, the step of obtaining the plurality of scores based on the plurality of first features and the plurality of fifth features includes: performing point multiplication processing on the plurality of first features and the plurality of fifth features to obtain the plurality of scores.

In this possible implementation, in another example of obtaining scores, point multiplication is directly performed between the first features and the fifth features to obtain the scores that represent personalized diversity.

A third aspect of an embodiment of this application provides a recommendation device. The recommendation device includes: an obtaining unit, configured to obtain a first sequence, where the first sequence represents preliminary recommendation ranking of a plurality of to-be-recommended items, where the obtaining unit is further configured to obtain a plurality of first features based on the first sequence, where each of the plurality of first features represents an association relationship between a to-be-recommended item corresponding to each first feature and another to-be-recommended item; the obtaining unit is further configured to obtain a second sequence, where the second sequence represents ranking of a plurality of historical items related to historical behavior of a user; and the obtaining unit is further configured to obtain a second feature based on the second sequence, where the second feature represents a preference degree of the user for a category to which the plurality of historical items belong; and a re-ranking unit, configured to re-rank the first sequence based on the plurality of first features and the second feature to obtain a third sequence, where the third sequence is used to recommend an item to the user.

Optionally, in a possible implementation of the second aspect, the obtaining unit is specifically configured to split the second sequence into a plurality of subsequences based on the category of the plurality of historical items. The obtaining unit is specifically configured to obtain a plurality of first subfeatures of the plurality of subsequences. Each of the plurality of first subfeatures represents an association relationship between at least two historical items in a subsequence corresponding to each first subfeature, and the plurality of subsequences one-to-one correspond to the plurality of first subfeatures. The obtaining unit is specifically configured to obtain a plurality of second subfeatures based on the plurality of first subfeatures. Each of the plurality of second subfeatures represents an association relationship between a subsequence corresponding to each second subfeature and another subsequence, and the plurality of first subfeatures one-to-one correspond to the plurality of second subfeatures. The obtaining unit is specifically configured to concatenate and perform dimension reduction processing on the plurality of second subfeatures to obtain the second feature.

Optionally, in a possible implementation of the second aspect, the obtaining unit is specifically configured to obtain a third feature based on the second sequence. The third feature represents an association relationship between categories to which historical items in the second sequence belong. The obtaining unit is specifically configured to perform dimension reduction processing on the third feature to obtain the second feature.

Optionally, in a possible implementation of the second aspect, the obtaining unit is further configured to obtain a plurality of fourth features of the plurality of to-be-recommended items. The plurality of fourth features represent diversity of the plurality of to-be-recommended items, and the plurality of to-be-recommended items one-to-one correspond to the plurality of fourth features. The re-ranking unit is specifically configured to obtain a plurality of scores based on the plurality of first features, the second feature, and the plurality of fourth features. The plurality of scores represent scores of re-ranking of the plurality of to-be-recommended items, and the plurality of scores one-to-one correspond to the plurality of to-be-recommended items. The re-ranking unit is specifically configured to re-rank the plurality of to-be-recommended items based on the plurality of scores to obtain the third sequence.

Optionally, in a possible implementation of the second aspect, the re-ranking unit is specifically configured to obtain a plurality of fifth features based on the second feature and the plurality of fourth features. The plurality of fifth features represent personalized diversity features of the plurality of to-be-recommended items, and the plurality of fourth features one-to-one correspond to the plurality of fifth features. The re-ranking unit is specifically configured to obtain the plurality of scores based on the plurality of first features and the plurality of fifth features.

Optionally, in a possible implementation of the second aspect, the re-ranking unit is specifically configured to concatenate the plurality of first features and the plurality of fifth features to obtain a plurality of sixth features. The plurality of first features, the plurality of fifth features, and the plurality of sixth features one-to-one correspond to each other. The re-ranking unit is specifically configured to perform dimension reduction processing on the plurality of sixth features to obtain the plurality of scores.

Optionally, in a possible implementation of the second aspect, the re-ranking unit is specifically configured to perform point multiplication processing on the plurality of first features and the plurality of fifth features to obtain the plurality of scores.

A third aspect of an embodiment of this application provides a recommendation device. The recommendation device or a component (for example, a processor, a chip, or a chip system) in the recommendation device performs the method according to the first aspect or any possible implementation of the first aspect.

A fourth aspect of an embodiment of this application provides a recommendation device, including a processor. The processor is coupled to a memory, and the memory is configured to store a program or instructions. When the program or the instructions are executed by the processor, the recommendation device is enabled to implement the method according to the first aspect or any possible implementation of the first aspect.

A fifth aspect of an embodiment this application provides a computer-readable storage medium. The computer-readable storage medium stores instructions. When the instructions are executed on a computer, the computer is enabled to perform the method according to the first aspect or any possible implementation of the first aspect.

A sixth aspect of an embodiment of this application provides a computer program product. When the computer program product is executed on a computer, the computer is enabled to perform the method according to the first aspect or any possible implementation of the first aspect.

For technical effects brought by the second aspect, the third aspect, the fourth aspect, the fifth aspect, the sixth aspect, or any possible implementation thereof, refer to technical effects brought by the first aspect or different possible implementations of the first aspect. Details are not described herein again.

It can be learned from the foregoing technical solutions that this application has the following advantages: The ranking of the plurality of historical items related to the historical behavior of the user is obtained, and the preliminary recommendation ranking is updated based on the second feature obtained based on the ranking of the plurality of historical items. Because the second feature reflects the preference degree of the user for the category to which the plurality of historical items belong, the third sequence determined based on the second feature can provide personalized and diversified item recommendation for the user.

## BRIEF DESCRIPTION OF DRAWINGS

FIG. 1 is a diagram of a structure of a system architecture according to this application;
FIG. 2 is a diagram of a hardware structure of a chip according to this application;
FIG. 3A is a diagram of a deployment scenario according to this application;
FIG. 3B is a diagram of another deployment scenario according to this application;
FIG. 4 is a diagram of another structure of a system architecture according to this application;
FIG. 5 is a schematic flowchart of a recommendation method according to this application;
FIG. 6 is a diagram of a processing procedure of a relevance evaluator according to this application;
FIG. 7 is another schematic flowchart of a recommendation method according to this application;
FIG. 8 is a diagram of a processing procedure of a diversity evaluator according to this application;
FIG. 9A and FIG. 9B are diagrams of several processing procedures of a re-ranking scorer according to this application;
FIG. 10 is a diagram of a structure of a recommendation network according to this application;
FIG. 11 is a diagram of a comparison result between a recommendation network according to an embodiment of this application and an existing recommendation model;
FIG. 12 is a diagram of another comparison result between a recommendation network according to an embodiment of this application and an existing recommendation model;
FIG. 13 is a diagram of a structure of a recommendation device according to an embodiment of this application; and
FIG. 14 is a diagram of another structure of a recommendation device according to an embodiment of this application.

## DESCRIPTION OF EMBODIMENTS

Embodiments of this application provide a recommendation method and a related device, which can provide personalized and diversified item recommendation for a user. The method may be applied to a scenario such as a movie recommendation scenario or a game recommendation scenario in which an item is recommended to a user.

The following explains some terms or concepts in embodiments of this application, to facilitate understanding by a person skilled in the art.

1. Neural network

The neural network may include a neuron. The neuron may be an operation unit that uses $X_s$ and an intercept of b as an input, where an output of the operation unit may be as follows:

$$h_{W,b}\left(x\right) = f\left(W^T x\right) = f(\sum\nolimits_{s=1}^{n} W_s x_s + b)$$

s=1, 2, ..., and n, n is a natural number greater than 1, $W_s$ is a weight of $X_s$, b is a bias of the neuron, and f is an activation function (activation function) of the neuron, and is used to introduce a non-linear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

2. Transformer

The transformer is structured as a feature extraction network (similar to a convolutional neural network) that includes an encoder and a decoder.

The encoder performs feature learning in a global receptive field through self-attention, for example, a feature of a pixel.

The decoder learns a feature of a required module through self-attention and cross-attention, for example, a feature of an output box.

The following describes attention (which may also be referred to as an attention mechanism).

The attention mechanism can quickly extract an important feature of sparse data. The attention mechanism occurs between the encoder and the decoder or between an input sentence and a generated sentence. A self-attention mechanism in a self-attention model occurs inside an input sequence or an output sequence, and can extract a connection between words that are away from each other in a same sentence, for example, a syntactic feature (phrase structure). The self-attention mechanism provides, through QKV, an effective modeling manner for capturing global context information. It is assumed that an input is Q (query) and a context is stored in a form of a key-value pair (K, V). In this case, the attention mechanism is actually a mapping function from the query to a series of key-value pairs (key, value). The attention function may be essentially described as mapping from the query (query) to a series of key-value (key-value) pairs. The attention essentially assigns a weight coefficient to each element in a sequence, which can also be understood as soft addressing. If each element in the sequence is stored in a form of (K, V), the attention completes addressing by calculating a similarity between Q and K. The calculated similarity between Q and K reflects importance of the extracted V value, namely, a weight. Then, a final eigenvalue is obtained through weighted summation.

The attention calculation mainly includes three steps. The first step is to calculate similarities between the query and the keys to obtain weights. Common similarity functions include dot product, concatenation, perceptron, and the like. Then the second step is usually to use a softmax function to normalize the weights (normalization can be performed to obtain probability distribution whose sum of all weight coefficients is 1, and weights of important elements can be highlighted by using the softmax function). Finally, a final feature eigenvalue is obtained through weighted summation on the weights and corresponding key values. A specific calculation formula may be as follows:

$$Attention\ (Q, K, V)\ = softmax(\frac{QK^T}{\sqrt{d}}) \cdot V$$

d represents a dimension of a QK matrix.

In addition, the attention includes the self-attention and the cross-attention. The self-attention may be understood as special attention, that is, inputs of QKV are consistent. Inputs of QKV in the cross-attention are inconsistent. The attention means to use a similarity (for example, an inner product) between features as a weight to integrate a queried feature as an updated value of a current feature. The self-attention is attention extracted based on focus of a feature map itself.

For convolution, a setting of a convolutional kernel limits a size of a receptive field. As a result, a network usually requires a plurality of layers to be stacked to focus on the entire feature map. The self-attention has an advantage of global focus, allowing global spatial information of the feature map to be obtained through simple query and assignment. A special point of the self-attention in a query key value (query key value, QKV) model is that the inputs corresponding to QKV are consistent. The QKV model is to be described later.

3. Multilayer perceptron (multilayer perceptron, MLP)

The multilayer perceptron, also referred to as a multilayer perceptron, is a feed-forward artificial neural network model that maps an input to a single output.

4. Loss function

In a process of training a neural network, because it is expected that an output of the neural network is as close as possible to a value that actually needs to be predicted, a current predicted value of the network and an actually expected target value may be compared, and then a weight vector of each layer of the neural network is updated based on a difference between the current predicted value and the target value (certainly, before a first update, there is usually an initialization process, that is, preconfiguring a parameter for each layer of the neural network). For example, if the predicted value of the network is large, the weight vector is adjusted to decrease the predicted value, and adjustment is continuously performed, until the neural network can predict the actually expected target value. Therefore, "how to obtain, through comparison, a difference between the predicted value and the target value" needs to be predefined. This is the loss function (loss function) or an objective function (objective function). The loss function and the objective function are important equations that measure the difference between the predicted value and the target value. The loss function is used as an example. A larger output value (loss) of the loss function represents a larger difference. Therefore, training of the neural network is a process of minimizing the loss as much as possible.

5. Cross entropy

The cross entropy is a commonly used concept in deep learning, and is usually used to calculate a difference between a target value and a predicted value. The cross entropy is usually used as a loss function of a neural network.

6. Word vector (Embedding)

The word vector may also be referred to as "word embedding", "vectorization", "vector mapping", "embedding", or the like. In terms of a form, the word vector represents an object with a dense vector, for example, represents a user's identity document (identity document, ID), an item ID, or the like by using a vector.

7. Recommendation system

The recommendation system is a tool that automatically connects a user and an item, and can help the user find information that interests the user in an information overload environment. For example, the recommendation system can actively and quickly recommend, to the user from massive data, a recommendation result (for example, a commodity, a movie, a piece of music, or a game) that meets user needs.

The recommendation system includes a plurality of phases. For example, the recommendation system includes a recall phase and a ranking phase. The recall phase is mainly to quickly retrieve, from massive items based on some features of the user, some items that the user is potentially interested in. In the sorting phase, more features and/or complex models are introduced to accurately provide personalized recommended items for the user from the foregoing some items.

In actual application, because an amount of data is excessively large, a coarse ranking phase and/or a fine ranking phase may be added between the recall phase and the ranking phase. Alternatively, it is understood that the ranking phase includes at least one of a coarse ranking phase, a fine ranking phase, a re-ranking phase, and the like. The coarse ranking phase and the fine ranking phase may be used to reduce a quantity of items transmitted in a subsequent phase. Usually, a quantity of items output in the coarse ranking phase is greater than that output in the fine ranking phase. The re-ranking phase is mainly used to re-rank items output in the recall phase, the coarse ranking phase, or the fine ranking phase, to provide the user with items that interest the user more. Further, performance of the re-ranking phase, as the last phase of a multi-phase recommendation system, directly determines user satisfaction and system revenue. An initial ranking result of the fine ranking phase is input in the re-ranking phase. Based on different optimization objectives, a re-ranked sequence is output and displayed to the user. The re-ranking phase is a ranking manner that takes into account an interrelationship and impact between items. Whether the user is interested in an item in a list depends not only on the item, but also on another item in a same list.

8. Recommendation personalization

Recommendation personalization means that a recommendation system provides different recommendation results for different users. Because users have different interests and preferences, recommendation diversity means that different recommendation results are provided for different users to meet the interests and preferences of different users.

9. Recommendation diversity

Recommendation personalization means that recommendation results provided by a recommendation system for different users should be as diversified and rich as possible, for example, covering more categories.

A conventional recommendation system usually simply assumes that all users have a same acceptance degree for diversity, and improves recommendation diversity of all users without distinction. In other words, most conventional recommendation systems optimize only accuracy of recommendation results, but ignore diversity of the recommendation results. Actually, different users have different acceptance degrees for diversity. Therefore, recommendation diversity of all users should not be equally and uniformly improved. In order to provide diversified recommendation results for users, an existing recommendation system usually uses a Big Five personality (Big Five personality) model to provide diversified recommendation results for users. Dimensions of the Big Five personality model include openness to experience, conscientiousness, extroversion, agreeableness, and neuroticism. Specifically, in this solution, a corresponding Big Five personality model is output through a manner of distributing questionnaires to users, to provide different degrees of diversified recommendation results for different users.

However, the manner of distributing questionnaires requires the users to actively report information, and an amount of data is huge. Therefore, the manner is not suitable for an existing commercial recommendation system.

To resolve the foregoing problem, an embodiment of this application provides a recommendation method.

Ranking of a plurality of historical items related to historical behavior of the user is obtained, and preliminary recommendation ranking is updated based on a second feature obtained based on the ranking of the plurality of historical items. Because the second feature reflects a preference degree of the user for a category to which the plurality of historical items belong, a third sequence determined based on the second feature can provide personalized and diversified item recommendation for the user.

Before a recommendation method and a related device that are provided in this application are described with reference to the accompanying drawings, a system architecture provided in this application is first described.

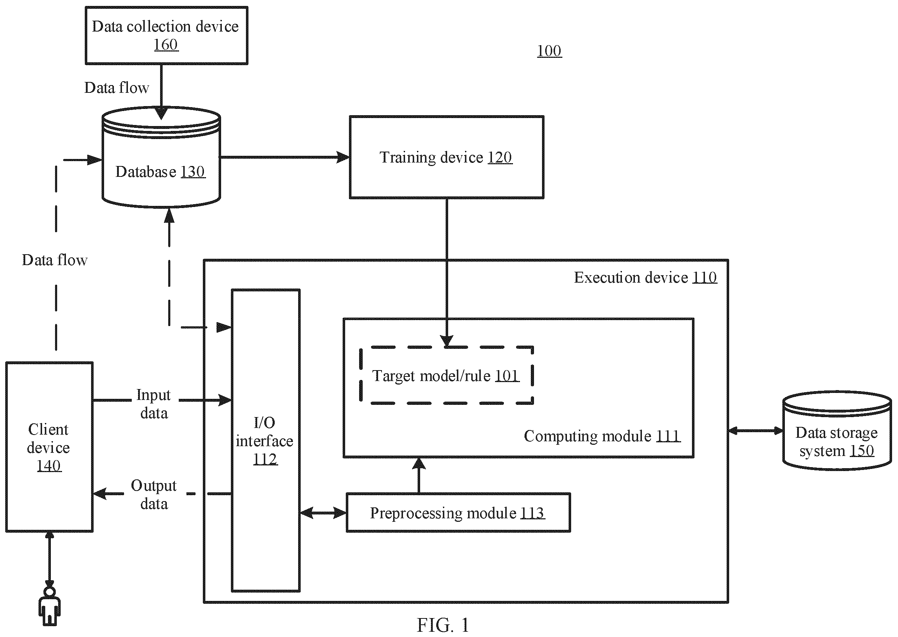

Refer to FIG. 1. An embodiment of this application provides a system architecture 100. As shown in the system architecture 100, a data collection device 160 is configured to collect training data. The training data in this application includes a historical item related to user behavior. The user behavior represents an association between the user and the historical item. For example, the user behavior includes querying an item, tapping an item, adding an item to favorites, sharing an item, purchasing an item, playing an item, and the like. The training data is stored in a database 130, and a training device 120 obtains a target model/rule 101 through training based on the training data maintained in the database 130. The following describes in more detail how the training device 120 obtains the target model/rule 101 based on the training data. The target model/rule 101 can be used to implement the recommendation method provided in embodiments of this application. The target model/rule 101 in this embodiment of this application may be specifically a recommendation network or the like. It should be noted that in actual application, the training data maintained in the database 130 is not necessarily from data collected by the data collection device 160, but may be received from another device. It should further be noted that the training device 120 may not necessarily train the target model/rule 101 completely based on the training data maintained in the database 130, or may obtain training data from a cloud or another place to perform model training. The foregoing descriptions should not be construed as a limitation on this embodiment of this application.

The target model/rule 101 obtained through training by the training device 120 may be applied to a system or a device different from the training device 120, for example, an execution device 110 shown in FIG. 1. The execution device 110 may be a terminal, for example, a mobile phone terminal, a tablet computer, a laptop computer, an augmented reality (augmented reality, AR) terminal/virtual reality (virtual reality, VR) terminal, or a vehicle-mounted terminal, or may be a server, a cloud, or the like. In FIG. 1, the execution device 110 is configured with an I/O interface 112, configured to exchange data with an external device. The user may input data to the I/O interface 112 by using a client device 140. The input data includes at least one of the following in this embodiment of this application: user information, item information, category information, a recommendation request, a model download request, and the like. The user information may include a user age, a gender, an occupation, and the like. The item information may vary depending on an item. For example, when the item is a commodity, the item information includes a price, a color, and target users. For another example, when the item is a movie, the item information includes a ticket price, a movie score, a movie starring actor, a movie director, and the like. The category information is related to the item information. For example, when the item is a commodity, the category information includes clothing, an electrical appliance, and cosmetics. For another example, when the item is a movie, the category information includes an action movie, a comedy movie, a thriller movie, and the like. The model download request is used to download a trained target model/rule 101. In addition, the input data may be input by the user, or may be from the database. This is not specifically limited herein.

The preprocessing module 113 is configured to perform preprocessing (for example, linear processing or segmentation processing) based on the input data received by the I/O interface 112.

In a process in which the execution device 110 preprocesses the input data, or in a process in which a computing module 111 of the execution device 110 performs related processing such as computing, the execution device 110 may invoke data, code, and the like in a data storage system 150 for corresponding processing. For example, the input data is processed by using the target model/rule 101 to obtain a processing result. For another example, a processing result is displayed to the user, or data, instructions, and the like that are obtained through corresponding processing may be stored in the data storage system 150. The processing result may be understood as a recommendation result, and may be specifically ranking of a plurality of recommended items, a preset quantity of recommended items, or the like.

Finally, the I/O interface 112 returns a processing result, for example, the foregoing obtained processing result or the trained model (that is, the target model/rule 101), to the client device 140, to provide the processing result for the user.

It should be noted that the training device 120 may generate corresponding target models/rules 101 for different targets or different tasks based on different training data. The corresponding target models/rules 101 may be used to implement the foregoing targets or complete the foregoing tasks, to provide a needed result for the user.

In a case shown in FIG. 1, the user may manually provide the input data. For example, a price, a color, a manufacturer to which an item belongs, and the like that are acceptable to the user are input by using the I/O interface 112. For another example, the input data is selected from the memory of the execution device 110 by using an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 1 is merely a diagram of a system architecture according to this embodiment of this application, and a location relationship between a device, a component, and a module that are shown in the figure does not constitute any limitation. For example, in FIG. 1, the data storage system 150 is an external memory relative to the execution device 110. In other cases, the data storage system 150 may alternatively be disposed in the execution device 110.

As shown in FIG. 1, the target model/rule 101 is obtained through training based on the training device 120. The target model/rule 101 may be a recommendation network in this embodiment of this application. A training process of the recommendation network is described in subsequent embodiments. Details are not described herein again.

The following describes a hardware structure of a chip according to an embodiment of this application.

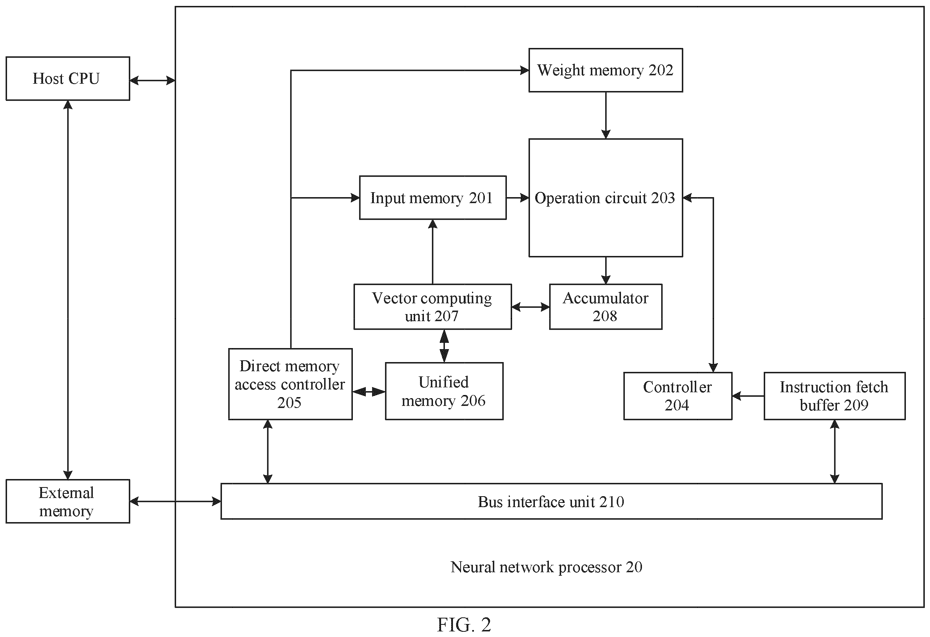

FIG. 2 is a hardware structure of a chip according to an embodiment of this application. The chip includes a neural network processor 20. The chip may be disposed in the execution device 110 shown in FIG. 1, and is configured to complete computing work of the computing module 111. The chip may alternatively be disposed in the training device 120 shown in FIG. 1, and is configured to complete training work of the training device 120 and output the target model/rule 101.

The neural network processor 20 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). An NPU is used as an example. The neural network processor 20 serves as a coprocessor, and is disposed on a host central processing unit (central processing unit, CPU) (host CPU). The host CPU assigns a task. A core part of the NPU is an operation circuit 203, and a controller 204 controls the operation circuit 203 to extract data in a memory (a weight memory or an input memory) and perform an operation.

In some implementations, the operation circuit 203 includes a plurality of processing units (process engine, PE). In some implementations, the operation circuit 203 is a two-dimensional systolic array. The operation circuit 203 may alternatively be a one-dimensional systolic array or another electronic circuit that can perform mathematical operations such as multiplication and addition. In some implementations, the operation circuit 203 is a general-purpose matrix processor.

For example, it is assumed that there is an input matrix A, a weight matrix B, and an output matrix C. The operation circuit fetches, from a weight memory 202, data corresponding to the matrix B, and caches the data on each PE in the operation circuit. The operation circuit fetches data of the matrix A from an input memory 201, to perform a matrix operation on the matrix B, and stores an obtained partial result or an obtained final result of the matrix in an accumulator 208.

A vector computing unit 207 may perform further processing such as vector multiplication, vector addition, an exponent operation, a logarithm operation, or value comparison on an output of the operation circuit. For example, the vector computing unit 207 may be configured to perform network computing such as pooling (Pooling), batch normalization (Batch Normalization), or local response normalization (Local Response Normalization) at a non-convolutional/non-FC layer in the neural network.

In some implementations, the vector computing unit 207 stores a processed output vector in a unified buffer 206. For example, the vector computing unit 207 may apply a non-linear function to the output of the operation circuit 203, for example, to a vector of an accumulated value, to generate an activation value. In some implementations, the vector computing unit 207 generates a normalized value, a combined value, or both. In some implementations, the processed output vector can be used as an activation input into the operation circuit 203, for example, to be used at a subsequent layer of the neural network.

The unified memory 206 is configured to store input data and output data.

Weight data is directly transferred from an external memory to the input memory 201 and/or the unified memory 206 by using a direct memory access controller 205 (direct memory access controller, DMAC), the weight data in the external memory is stored in the weight memory 202, and the data in the unified memory 206 is stored in the external memory.

A bus interface unit (bus interface unit, BIU) 210 is configured to implement interaction between the host CPU, the DMAC, and an instruction fetch buffer 209 by using a bus.

The instruction fetch buffer (instruction fetch buffer) 209 connected to the controller 204 is configured to store an instruction used by the controller 204.

The controller 204 is configured to invoke the instruction buffered in the instruction fetch buffer 209, to control a working process of the operation accelerator.

Usually, the unified memory 206, the input memory 201, the weight memory 202, and the instruction fetch buffer 209 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

The following describes several deployment scenarios provided in embodiments of this application.

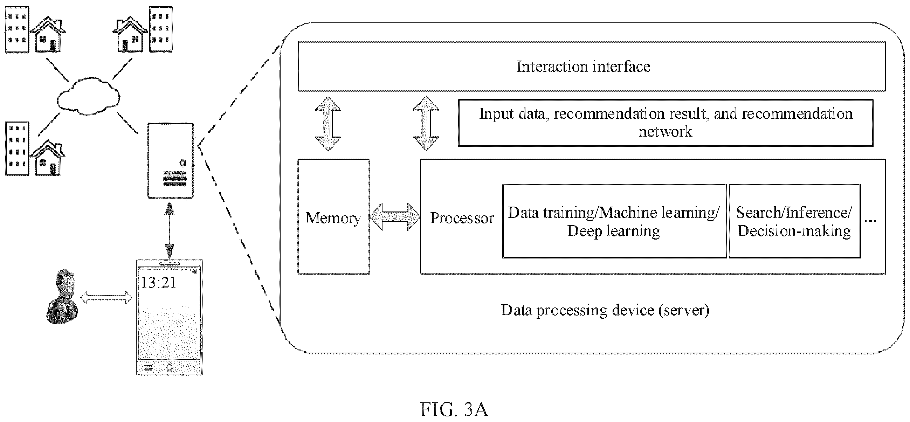

FIG. 3A is a diagram of a structure of a deployment scenario according to an embodiment of this application. The deployment scenario includes a terminal device (in FIG. 3A, only a mobile phone is used as an example of the terminal device) and a server. It may be understood that in addition to being the mobile phone, the terminal device may be a terminal device such as a tablet computer (pad), a portable game console, a palmtop computer (personal digital assistant, PDA), a notebook computer, an ultra-mobile personal computer (ultra-mobile personal computer, UMPC), a handheld computer, a netbook, a vehicle-mounted media playback device, a wearable electronic device, a virtual reality (virtual reality, VR) terminal device, an augmented reality (augmented reality, AR) terminal device, a vehicle, a vehicle-mounted terminal, an airplane terminal, or an intelligent robot. The terminal device is an initiating end of data processing (for example, model training or a recommendation method), and is used as an initiator of a data processing request. Usually, a user initiates the data processing request by using the terminal device. The server may be understood as a data processing device.

The server may be a device or a server having a data processing function, such as a cloud server, a network server, an application server, or a management server. The data processing device receives the data processing request from the terminal device through an interaction interface, and then performs, by using a data storage memory and a data processing processor, data processing in such manners as machine learning, deep learning, search, inference, and decision-making. For example, the terminal device reports a recommendation request to the server, and the server processes the recommendation request by using a recommendation network to obtain a recommendation result. The memory in the data processing device may be a general name, and includes a local storage and a database storing historical data. The database may be in the data processing device, or may be in another network server.

In the deployment scenario shown in FIG. 3A, the terminal device may receive an instruction of a user. For example, the terminal device may obtain a plurality of pieces of information (for example, an item related to historical behavior of the user, a color of the item, a price of the item, and a manufacturer to which the item belongs) entered/selected by the user, and then initiate a request to the data processing device, so that the data processing device trains a neural network based on the plurality of pieces of information obtained by the terminal device, to obtain a trained neural network (for example, the recommendation network). The terminal device downloads or uploads the recommendation request for recommendation. For another example, the terminal device may obtain input data input/selected by the user, and then initiate a request to the data processing device (that is, the server), so that the data processing device executes a data processing application for the input data obtained by the terminal device, to obtain a processing result (for example, the recommendation result) corresponding to the input data. The processing result is displayed on the terminal device for the user to view and use (for example, purchasing an item or adding an item to favorites).

In FIG. 3A, the data processing device may perform the recommendation method according to embodiments of this application.

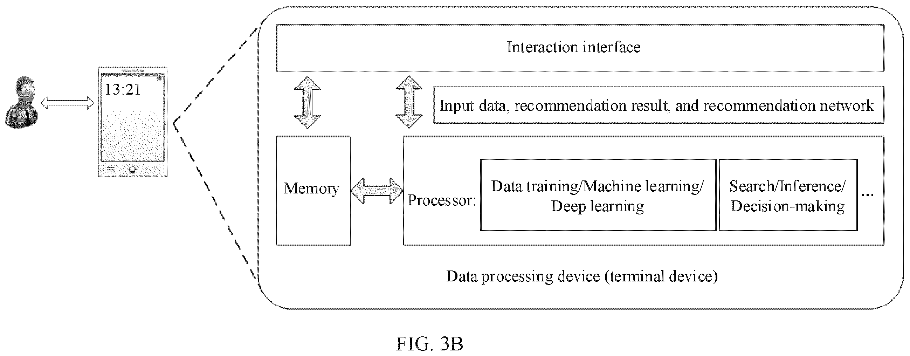

FIG. 3B is a diagram of a structure of another deployment scenario according to an embodiment of this application. In FIG. 3B, a terminal device (in FIG. 3B, only a mobile phone is used as an example of the terminal device) is directly used as a data processing device. The terminal device can directly obtain a plurality of samples, and hardware of the terminal device directly processes the samples. A specific process is similar to that in FIG. 3A. For details, refer to the foregoing descriptions. Details are not described herein again.

Optionally, in the deployment scenario shown in FIG. 3B, the terminal device may receive an instruction of a user. For example, the terminal device may obtain a plurality of pieces of information entered/selected by the user (for example, an item related to historical behavior of the user, a color of the item, a price of the item, and a manufacturer to which the item belongs), and then the terminal device trains the plurality of pieces of information to obtain a trained neural network (for example, a recommendation network) for use by the user. For another example, the terminal device may obtain input data entered/selected by the user, and then execute a data processing application for the input data obtained by the terminal device, to obtain a processing result (for example, a recommendation result) corresponding to the input data. The processing result is displayed to the user for the user to view and use (for example, purchasing an item or adding an item to favorites).

Optionally, the terminal device may collect, in real time or periodically, an item browsed by the user, and the like, and then perform neural network training or model inference by using the item browsed by the user, to obtain an inference result or the like.

In FIG. 3B, the terminal device may perform the recommendation method according to embodiments of this application.

The terminal device in FIG. 3A and FIG. 3B may be specifically the client device 140 or the execution device 110 in FIG. 1. The data processing device in FIG. 3A may be specifically the execution device 110 in FIG. 1. The data storage system 150 may store samples in the execution device 110. The data storage system 150 may be integrated into the execution device 110, or may be disposed on a cloud or another network server.

The processor in FIG. 3A and FIG. 3B may process the input data by using a neural network model to obtain a recommendation result, or train the recommendation network by using a plurality of obtained samples. The inference result or the trained recommendation network is transmitted to the user.

The foregoing describes several deployment scenarios provided in embodiments of this application. The following describes an application scenario of the recommendation method provided in embodiments of this application, or may be understood as an application scenario of the trained neural network.

The following clearly and completely describes the technical solutions in embodiments of this application with reference to the accompanying drawings in embodiments of this application. It is clear that the described embodiments are merely some but not all of embodiments of this application.

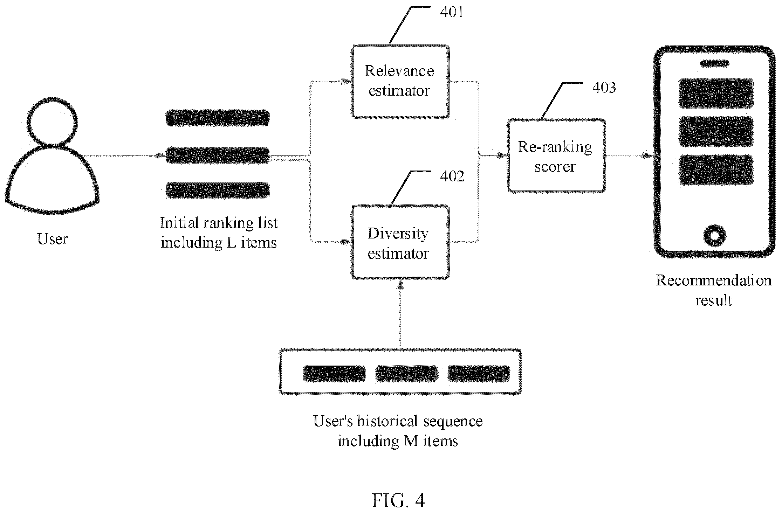

Refer to FIG. 4. An embodiment of this application provides another system architecture. The system architecture includes a relevance estimator 401, a diversity estimator 402, and a re-ranking scorer 403.

The relevance estimator 401 obtains an initial ranking list including L items, and outputs, by modeling a relationship and impact between the L items, a relevance representation corresponding to each item. The initial ranking list may be from a recall phase, a coarse ranking phase, a fine ranking phase, or the like of a recommendation system.

The diversity estimator 402 obtains the initial ranking list including L items and a user's historical sequence including M items, automatically learns, by using the user's historical sequence, a diversity preference of the user for different categories, and outputs, based on a category feature of an item in the initial ranking list, a diversity representation corresponding to each item.

The re-ranking scorer 403 outputs final re-ranking scores based on the relevance representation and the diversity representation of the items, and ranks the items based on the re-ranking scores to obtain recommendation results, and then displays the recommendation results to the user.

The process shown in FIG. 4 may be expressed in Formula 1 below:

$$\text{Formula 1:} \quad \varphi_{R_u} = g\!\left(f_r\!\left(R_u, T_u\right), f_d\!\left(\tau_{R_u}, T_u\right)\right)$$

$R_u$ represents an initial ranking list of to-be-recommended items. $\varphi_{R_u}$ represents a score of each item in a list R for a user u. $f_r$ represents the relevance estimator. $f_d$ represents a diversity estimator. $g$ represents a re-ranking scorer. $T_u$ represents historical behavior of the user u (or a historical item sequence related to historical behavior of the user u). $\tau_{R_u}$ is related to a category feature of an item R.

It may be understood that Formula 1 is merely an example. In actual application, Formula 1 may be in another form. This is not specifically limited herein.

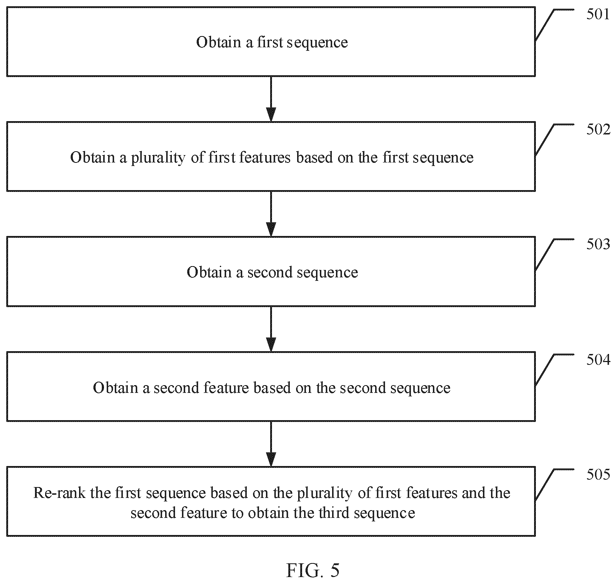

The following describes the foregoing specific procedure in detail with reference to FIG. 5.

In the system architecture, a preference of the user for a category of a historical item is learned and applied to re-ranking and scoring, so that an obtained recommendation result is diversified. In addition, both the diversity representation and the personalization representation are considered for re-ranking and scoring, so that the recommendation results are not only diversified but also personalized, to provide a recommendation result that meets user needs for the user. In addition, the diversity estimator, the re-ranking scorer, and the re-ranking scorer may be jointly trained. In this way, association between the diversity estimator, the re-ranking scorer, and the re-ranking scorer is more accurately used in an inference process, to obtain a better recommendation result.

The recommendation method provided in embodiments of this application may be applied to various recommendation systems, for example, recommendation systems like music, movie, e-commerce, and application market recommendation systems. Specifically, a scenario in which an item needs to be recommended, such as music recommendation, movie recommendation, commodity recommendation, restaurant recommendation, book recommendation, web page recommendation, and software download recommendation, may be implemented. The recommendation method may be performed by a recommendation device, or may be performed by a component (for example, a processor, a chip, or a chip system) in the recommendation device. The recommendation device may be the training device 120 in FIG. 1, and may alternatively be the data processing device or the like in FIG. 3A or FIG. 3B. The component of the recommendation device may be the neural network processor 20 of the chip in FIG. 2 or the like. This is not specifically limited herein.

FIG. 5 is a schematic flowchart of a recommendation method according to an embodiment of this application. The method may include step 501 to step 505.

Step 501: Obtain a first sequence.

In this embodiment of this application, there are a plurality of manners of obtaining the first sequence. The first sequence may be obtained from a recall phase of a recommendation system, may be obtained from a coarse ranking phase of a recommendation system, may be obtained from a fine ranking phase of a recommendation system, may be received from another device, may be selected from a database, or the like. This is not specifically limited herein.

The first sequence represents preliminary recommendation ranking of a plurality of to-be-recommended items.

Step 502: Obtain a plurality of first features based on the first sequence.

After the first sequence is obtained, the plurality of first features are obtained based on the first sequence. Each of the plurality of first features represents an association relationship between a to-be-recommended item corresponding to each first feature and another to-be-recommended item.

The association relationship between the to-be-recommended item and the another to-be-recommended item may be a price relationship, a quality relationship, a reputation relationship, whether the to-be-recommended item is applicable to a user, or the like. User's selection of the to-be-recommended item is not independent, but is determined, depending on mutual impact of other items in a list, during comparison. For example, if two headsets of similar quality are displayed in a same recommendation list, a user's tapping probability of the headset with a better price and reputation increases, and a tapping rate of the other headset decreases. This phenomenon can be understood as a relationship or mutual impact between items.

Specifically, the plurality of to-be-recommended items are first determined based on the first sequence, and the plurality of first features of the plurality of to-be-recommended items are separately extracted. The plurality of to-be-recommended items one-to-one correspond to the plurality of first features.

Optionally, the plurality of first features are obtained by using the relevance estimator shown in FIG. 4. In this embodiment of this application, the relevance estimator is mainly configured to extract an association relationship between to-be-recommended items in the first sequence. A specific structure of the relevance estimator may be at least one of the following: a bidirectional long short-term memory model (bi-directional long short-term memory, BiLSTM), a long short-term memory model (long short-term memory, LSTM), a gated recurrent unit (Gated Recurrent Unit, GRU), an attention mechanism (Attention), a pointer network (PointerNet), and the like.

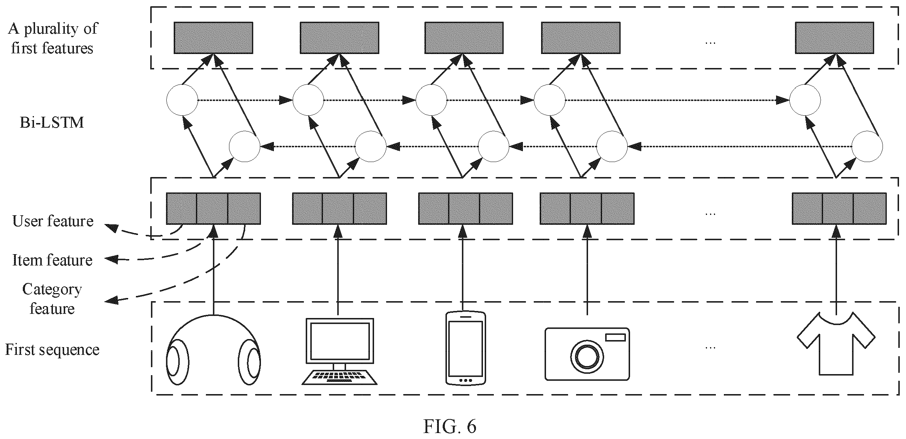

For example, an example in which the relevance estimator is the BiLSTM is used, and a process of step 502 may be shown in FIG. 6. FIG. 6 may also be understood as a diagram of a processing procedure of the relevance estimator. After obtaining the first sequence, the relevance estimator obtains the plurality of first features of the plurality of to-be-recommended items by using the BiLSTM. Each of the plurality of first features represents the association relationship between the to-be-recommended item corresponding to each first feature and the another to-be-recommended item. The association relationship between the to-be-recommended item and the another to-be-recommended item may be a price relationship, a quality relationship, a reputation relationship, whether the to-be-recommended item is applicable to a user, or the like.

For example, if the first sequence is represented by R, the first feature of the $i^{th}$ to-be-recommended item in the first sequence is denoted as $h_{R(i)}$

Step 503: Obtain a second sequence.

In this embodiment of this application, there are a plurality of manners of obtaining the second sequence. The second sequence may be obtained from a user's operation, may be received from another device, may be selected from a database, or the like. This is not specifically limited herein. The second sequence represents ranking of a plurality of historical items related to historical behavior of a user.

For example, the historical behavior includes at least one of the following: a selection operation, an operation of adding an item to favorites, a purchasing operation, a browsing operation, a sharing operation, and the like.

Optionally, the plurality of historical items related to the user are obtained, and the plurality of historical items are ranked based on moments when the plurality of historical items are associated with the user (for example, the foregoing selection operation, the purchasing operation, and the operation of adding an item to favorites), to obtain the second sequence.

Step 504: Obtain a second feature based on the second sequence.

After the second sequence is obtained, the second feature is obtained based on the second sequence. The second feature represents a preference degree of the user for the category to which the plurality of historical items belong.

In this embodiment of this application, there are a plurality of manners of obtaining the second feature based on the second sequence, and the following separately describes the manners.

In a first manner, the second feature is obtained in a manner of splitting the second sequence.

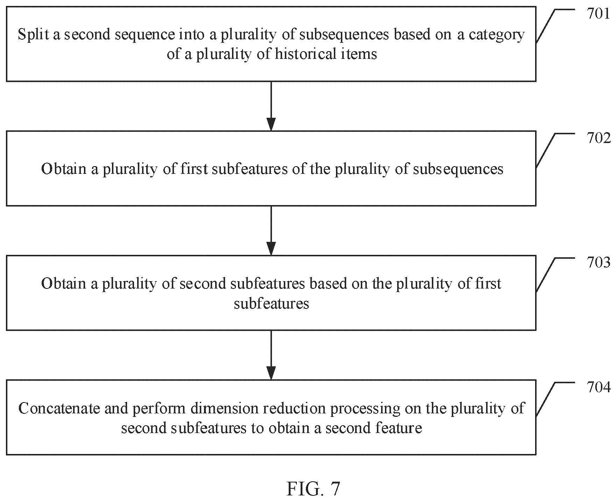

In this case, a procedure of step 504 may be shown in FIG. 7. The procedure includes step 701 to step 704. The following describes the steps.

Step 701: Split the second sequence into a plurality of subsequences based on the category of the plurality of historical items.

After the second sequence is obtained, the second sequence is split into the plurality of subsequences based on the item category. The item category may be an electrical appliance, clothing, sports, or the like. It may be understood that the item category may be set based on an actual requirement. For example, the item category includes clothes, trousers, and the like. For another example, the item category includes an item production place, an item price range, and the like. This is not specifically limited herein.

In addition, a quantity of subsequences is related to the category. For example, the quantity of subsequences is equal to a quantity of categories of the historical items. If the plurality of historical items have m categories, the quantity of subsequences may be m. m is a positive integer greater than 1. For example, the plurality of subsequences are denoted as $T_1,...,T_m$.

Step 702: Obtain a plurality of first subfeatures of the plurality of subsequences.

After the plurality of subsequences are obtained, the plurality of first subfeatures of the plurality of subsequences are obtained. Each of the plurality of first subfeatures represents an association relationship between at least two historical items in a subsequence corresponding to each first subfeature, and the plurality of subsequences one-to-one correspond to the plurality of first subfeatures.

The foregoing first subfeature may be understood as an association relationship between historical items in a subsequence.

Optionally, the plurality of first subfeatures of the plurality of subsequences may be obtained by using a plurality of LSTMs. Alternatively, it is understood that one first subfeature of one subsequence is obtained by using one LSTM. It may be understood that the plurality of first subfeatures may alternatively be obtained by using another structure. This is not specifically limited herein.

For example, if an example in which the quantity of the plurality of subsequences is m is used, the plurality of first subfeatures may be denoted as $t_j$, $j = 1,..., m$.

Step 703: Obtain a plurality of second subfeatures based on the plurality of first subfeatures.

After the plurality of first subfeatures are obtained, the plurality of second subfeatures are obtained based on the plurality of first subfeatures. Each of the plurality of second subfeatures represents an association relationship between a subsequence corresponding to each second subfeature and another subsequence, and the plurality of first subfeatures one-to-one correspond to the plurality of second subfeatures.

The second subfeature may be understood as an association relationship between a plurality of subsequences.

Optionally, the plurality of first subfeatures may be input into a self-attention mechanism to obtain an attention result, and the attention result is disassembled to obtain the plurality of second subfeatures. It may be understood that the plurality of second subfeatures may alternatively be obtained by using another structure. This is not specifically limited herein.

For example, the foregoing attention result may be represented by using Formula 2 below:

$$\text{Formula 2:} \quad A = Attention\,(V) = \text{soft max}\left(\frac{VV^T}{\sqrt{qh}}\right)V$$

V represents stacking of the plurality of first subfeatures. $\sqrt{qh}$ is used to stabilize a parameter in an attention-based training process. A represents a matrix obtained after the plurality of first subsequences interact with each other. Each row of elements of the matrix A is used as a second subfeature.

It may be understood that Formula 2 is merely an example. In actual application, Formula 2 may be in another form. This is not specifically limited herein.

Step 704: Concatenate and perform dimension reduction processing on the plurality of second subfeatures to obtain the second feature.

After the plurality of second subfeatures are obtained, the plurality of second subfeatures are concatenated and dimension reduction processing is performed on the plurality of second subfeatures to obtain the second feature.

Specifically, the plurality of second subfeatures are first concatenated to obtain a long vector, and then dimension reduction processing is performed on the long vector to obtain the second feature.

For example, the foregoing example is continued. Each row of elements of the matrix A is concatenated into a long vector $[a_1 ,..., a_m]$, and then dimension reduction processing is performed on the long vector by using a multilayer perceptron (multilayer perceptron, MLP), to obtain an m-dimensional second feature. The process may be expressed in Formula 3:

$$\text{Formula 3:} \quad \hat{\theta} = MLP_\theta[a_1,..., a_m]$$

Each element in $\hat{\theta}$ represents an interest preference (that is, the second feature) of the user for a corresponding category.

It may be understood that Formula 3 is merely an example. In actual application, Formula 3 may be in another form. This is not specifically limited herein.

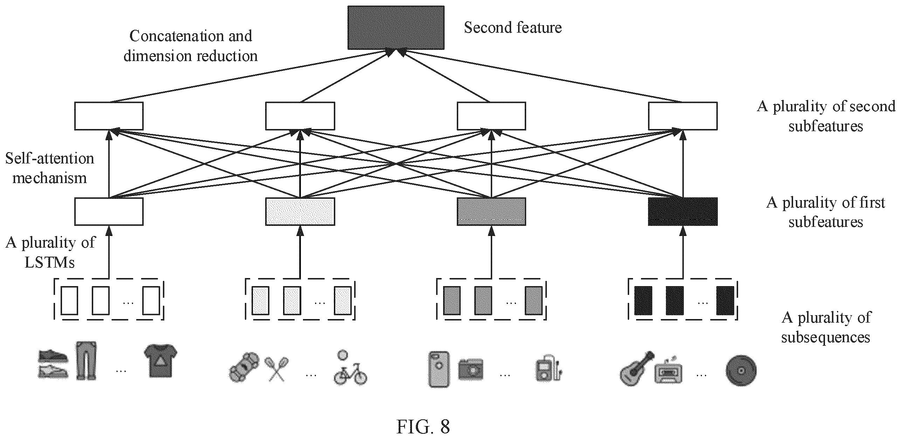

For example, to more intuitively learn a processing procedure of the first case, refer to FIG. 8. FIG. 8 may also be understood as a diagram of a processing procedure of a diversity evaluator. The plurality of subsequences are obtained, and the plurality of subsequences are respectively input into the LSTMs to obtain the plurality of first subfeatures. The plurality of second subfeatures corresponding to the plurality of first subfeatures are obtained by using the self-attention mechanism. Then, the plurality of second subfeatures are concatenated and dimension reduction processing is performed on the plurality of second subfeatures to obtain the second feature.

In a second manner, the second feature is obtained in a manner of not splitting the second sequence.

In this case, after the second sequence is obtained, a third feature is first obtained based on the second sequence, and dimension reduction processing is performed on the third feature to obtain the second feature. The third feature represents an association relationship between categories to which historical items in the second sequence belong.

Optionally, the second sequence is input into the LSTM to obtain the third feature, and then dimension reduction processing is performed on the third feature by using the MLP to obtain the second feature.

It may be understood that the foregoing several manners of obtaining the second feature are merely examples. In actual application, there may be another manner. This is not specifically limited herein.

Different users may have different degrees for diversity. For example, some users particularly prefer more diversified recommendation results, some users only want diversity in specific categories, and some users may not like diversified results at all. Because the second feature may represent the preference degree of the user for a category, the second feature of the second sequence is obtained, the user's preference for diversity may be automatically learned based on the second sequence, and subsequently a recommendation result corresponding to the diversity preference is provided for the user.

Step 505: Re-rank the first sequence based on the plurality of first features and the second feature to obtain the third sequence.

After the plurality of first features and the second feature are obtained, the first sequence is re-ranked based on the plurality of first features and the second feature to obtain the third sequence. The third sequence is used to recommend an item to the user.

Specifically, a plurality of scores are first obtained based on the plurality of first features and the second feature. The plurality of scores represent scores of re-ranking of the plurality of to-be-recommended items, and the plurality of scores one-to-one correspond to the plurality of to-be-recommended items. Then, the plurality of to-be-recommended items are re-ranked based on the plurality of scores to obtain the third sequence.

There are a plurality of manners of obtaining the plurality of scores based on the plurality of first features and the second feature. The plurality of scores may be obtained by performing point multiplication on each first feature and the second feature. Alternatively, another manner may be used. For example, after weighted summation is performed on the first features and the second feature, dimension reduction processing is performed to obtain scores, and the like. This is not specifically limited herein.

Further, to consider diversity impact of each to-be-recommended item in the preliminary recommendation ranking on a final recommendation result, a plurality of fourth features of the plurality of to-be-recommended items may be further obtained. The plurality of fourth features represent diversity of the plurality of to-be-recommended items, and the plurality of to-be-recommended items one-to-one correspond to the plurality of fourth features. In this case, obtaining the plurality of scores based on the plurality of first features and the second feature specifically includes: obtaining the plurality of scores based on the plurality of first features, the second feature, and the plurality of fourth features.

The following describes specific processes of obtaining the plurality of fourth features and obtaining the plurality of scores.

First, the specific process of obtaining the plurality of fourth features is described. The diversity of the recommendation results also depends on a difference between the to-be-recommended items in the preliminary recommendation ranking. In this embodiment of this application, an example in which a probability coverage function is only a diversity function is used. Whether the preliminary recommendation ranking has covered a category $j$ is first determined by using the probability coverage function, and a difference (that is, an $i$th fourth feature) between a recommendation result that includes a to-be-recommended item $i$ and a recommendation result that does not include the to-be-recommended item $i$ is obtained. $j = 1,...,m,$ and $m$ represents a total quantity of item categories in the recommendation system. $R(i)$ represents an $i$th to-be-recommended item in a list R (that is, the preliminary recommendation ranking of the to-be-recommended items).

The following describes a process of obtaining a fourth feature by using Formula 4:

$$\text{Formula 4:} \quad \begin{aligned} c_j(R) &= 1 - \prod\nolimits_{R(i)\in R}\left(1 - \tau_{R(i)}^j\right) \\ d_R(R(i)) &= c(R) - c(R / R(i)) \end{aligned}$$

$j = 1,...,m$, and $m$ represents the total quantity of item categories in the recommendation system. $c_j(R)$ represents that at least one to-be-recommended item in the list R (that is, the preliminary recommendation ranking of the to-be-recommended items) covers the category *j*. $\tau^{j}_{R(i)}$ represents whether the item *R(i)* in the list R belongs to the category *j*. $d_R(R(i))$ represents a diversity difference (that is, the *i* th fourth feature) between a recommendation result that includes the to-be-recommended item *R(i)* and a recommendation result that does not include the to-be-recommended item *R(i)*. *R/R(i)* represents a list obtained after the to-be-recommended item *R(i)* is removed from the list R.

It may be understood that Formula 4 is merely an example. In actual application, Formula 4 may be in another form. This is not specifically limited herein.

For example, if a to-be-recommended item *R(i)* is very similar to another to-be-recommended item that already exists in the list, adding the to-be-recommended item *R(i)* to the list does not lead to much improvement in diversity.

Second, the following describes the specific process of obtaining the plurality of scores based on the plurality of first features, the second feature, and the plurality of fourth features.

Optionally, a plurality of fifth features are first obtained based on the second feature and the plurality of fourth features, and then the plurality of scores are obtained based on the plurality of first features and the plurality of fifth features. The plurality of fifth features represent personalized diversity features (that is, the diversity and personalization representations of the to-be-recommended items) of the plurality of to-be-recommended items, and the plurality of fourth features one-to-one correspond to the plurality of fifth features.

For example, point multiplication processing is performed on the second feature and the plurality of fourth features to obtain the plurality of fifth features. The following describes, by using Formula 5, a process of performing point multiplication on the second feature and a fourth feature to obtain a fifth feature:

$$\text{Formula 5:} \quad \Delta_R\big(R(i)\big) = \hat{\theta} \cdot d_R\big(R(i)\big)$$

$\Delta_R(R(i))$ represents a personalized diversity gain brought by the to-be-recommended item *R(i)* for the list R. $d_R(R(i))$ represents the i th fourth feature. $\hat{\theta}$ represents the second feature. If the to-be-recommended item can provide more diversity gains in a category that the user prefers, the to-be-recommended item is more attractive to the user, and diversity of the list is improved.

It may be understood that Formula 5 is merely an example. In actual application, Formula 5 may be in another form. This is not specifically limited herein.

In this embodiment of this application, there are a plurality of cases in which the plurality of scores are obtained based on the plurality of first features and the plurality of fifth features. The plurality of first features and the plurality of fifth features may be first concatenated to obtain a plurality of sixth features, and the plurality of scores are obtained based on the plurality of sixth features. Alternatively, point multiplication processing may be performed on the plurality of first features and the plurality of fifth features to obtain the plurality of scores. This is not specifically limited herein. The plurality of first features, the plurality of fifth features, and the plurality of sixth features one-to-one correspond to each other.

Optionally, after the plurality of sixth features are obtained, there are a plurality of manners of obtaining the plurality of scores based on the plurality of sixth features. In a first case (which may also be referred to as a deterministic case), the plurality of scores are directly estimated by using the plurality of sixth features (for example, the plurality of scores are obtained by performing dimension reduction processing on the plurality of sixth features). In a second case (which may also be referred to as a probabilistic case), a mean value and a variance of the scores are first estimated by using the plurality of sixth features, and then the plurality of scores are determined based on the mean value and the variance.

For example, in the first case, a process of obtaining the plurality of scores may be expressed in Formula 6:

$$\text{Formula 6:} \quad \varphi_R = MLP_{\varphi}\big[H_R, \Delta_R\big]$$

$\varphi_R$ represents the score of each to-be-recommended item. $H_R$ represents a relevance matrix obtained by stacking the plurality of first features. $\Delta_R$ represents a diversity matrix obtained by stacking the plurality of fifth features. $[H_R, \Delta_R]$ represents the plurality of sixth features obtained by performing concatenating processing on $H_R$ and $\Delta_R$. The MLP is used to reduce dimensions of the plurality of sixth features.

It may be understood that Formula 6 is merely an example. In actual application, Formula 6 may be in another form. This is not specifically limited herein.

For example, in the second case, a process of obtaining the plurality of scores may be expressed in Formula 7:

Formula 7: 
$$m_R = MLP_m[H_R, \Delta_R], \Sigma_R = MLP_\Sigma[H_R, \Delta_R]$$
$$\varphi_R = m_R + \Sigma_R$$

Two MLPs are used to respectively estimate a mean value $m_R$ and a variance $\Sigma_R$ of the scores. $\varphi_R$ represents the score of each to-be-recommended item. That is, the to-be-recommended items are re-ranked by using an upper confidence bound (upper confidence bound) of a scoring function.

In a training phase, because a sampling operation is not derivable, a random sampling process may alternatively be Formula 8 below, and a standard normal distribution random variable $\xi$ is introduced into Formula 8:

Formula 8: 
$$\Psi_R(R(i)) = \varphi_{R(i)} + \xi_{R(i)}\Sigma_{R(i)}$$

$\Psi_R$ represents a random sample of scoring. This process may be understood as using a score as distribution. In this way, parameters related to the mean value and the variance can be optimized by using standard back propagation to learn the distribution.

It may be understood that Formula 7 and Formula 8 are merely examples. In actual application, Formula 7 and Formula 8 may be in other forms. These are not specifically limited herein.

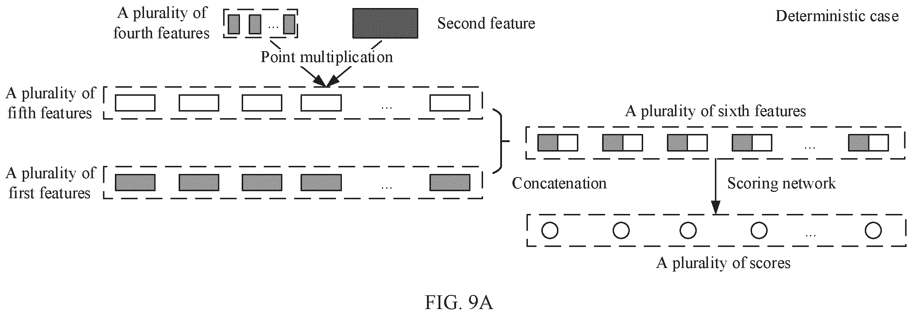

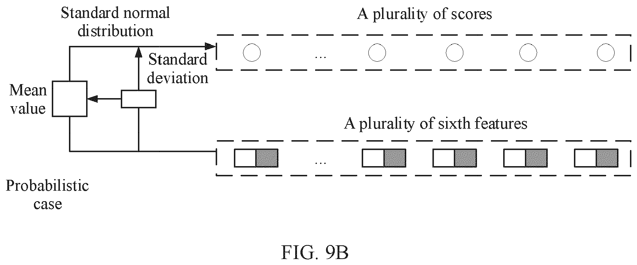

To more intuitively learn the foregoing plurality of cases of obtaining the scores, FIG. 9A shows an example of the first case. The plurality of first features and the plurality of fifth features are first concatenated to obtain the plurality of sixth features, and then the plurality of sixth features are processed by using a scoring network to obtain the plurality of scores. The scoring network may also be understood as being used for dimension reduction processing, and may be specifically a network structure like the MLP used for dimension reduction processing. This is not specifically limited herein. FIG. 9B shows an example of the second case. The plurality of first features and the plurality of fifth features are first concatenated to obtain the plurality of sixth features, the mean value and the variance of the scores are estimated by using the plurality of sixth features, and then the plurality of scores are determined based on the mean value and the variance (steps of obtaining the plurality of sixth features are similar to those in FIG. 9A, and are not shown in FIG. 9B). FIG. 9A and FIG. 9B may also be understood as diagrams of several processing procedures of a re-ranking scorer.

A time sequence between the steps in this embodiment of this application may be set based on an actual requirement. This is not specifically limited herein. For example, step 503 may be performed before or after step 501. For another example, step 502 may be performed before or after step 504. For another example, step 502 may be performed before or after step 503.

In this embodiment of this application, the ranking of the plurality of historical items related to the historical behavior of the user is obtained, and the preliminary recommendation ranking is updated based on the second feature obtained based on the ranking of the plurality of historical items. Because the second feature reflects the preference degree of the user for the category to which the plurality of historical items belong, the third sequence determined based on the second feature can provide personalized and diversified item recommendation for the user.

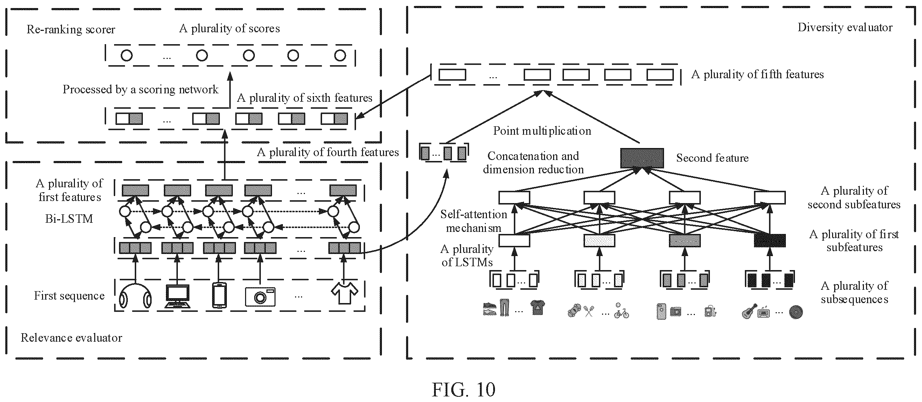

For example, FIG. 10 shows an example of a recommendation method provided in this application in the system architecture shown in FIG. 4. FIG. 10 may also be understood as a diagram of a structure of a recommendation network according to an embodiment of this application. The recommendation network includes a relevance estimator, a diversity estimator, and a re-ranking scorer. Specifically, the relevance estimator obtains a relevance feature of an item. The diversity estimator obtains a diversity feature of the item. The re-ranking scorer outputs final re-ranking scores based on the relevance feature and the diversity feature of the items, and ranks the items based on the re-ranking scores to obtain recommendation results, and then displays the recommendation results to a user.

In addition, in this embodiment of this application, the relevance estimator, the diversity estimator, and the re-ranking scorer may be jointly trained. That is, the recommendation network includes the relevance estimator, the diversity estimator, and the re-ranking scorer.

For example, an example in which a loss function is a binary cross entropy loss function is used, and a training process on a training set may be expressed in Formula 9 below:

Formula 9: 
$$L = -\sum_{l=1}^{n}\sum_{i=1}^{L}\left\{y_{R_l(i)}\log\left(\varphi_{R_l}\left(R_l(i)\right)\right) + \left(1 - y_{R_l(i)}\right)\log\left(1 - \varphi_{R_l}\left(R_l(i)\right)\right)\right\}$$

The foregoing may also be understood as follows: $R_l(i)$ represents an input of the recommendation network, $\varphi_{R_l}(R_l(i))$ represents an output of the recommendation network, and the recommendation network is trained with a goal in which a value of the loss function is less than a threshold. The loss function represents a difference between the output $\varphi_{R_l}$

($R_l(i)$) of the recommendation network and a value of a label $y_{R_l}(i)$. The label $y_{R_l}(i)$ whose value is 0 or 1 represents whether the user taps an $i^{th}$ item in a list $R_l$, where 1 represents that the user taps the item, and 0 represents that the user does not tap the item. n represents a quantity of re-ranking times in the training set, and may be determined based on a quantity of user requests, or may be a preset value or the like. L represents a quantity of items in each re-ranking.

It may be understood that Formula 9 is merely an example. In actual application, Formula 9 may be in another form. This is not specifically limited herein.

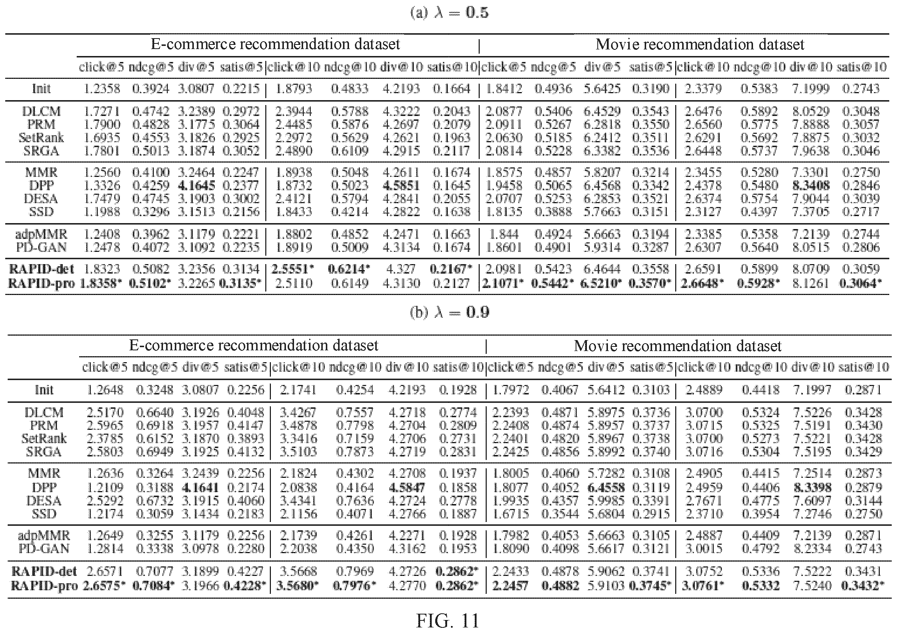

To more intuitively leam recommendation accuracy of the recommendation network provided in this embodiment of this application, two public datasets (an e-commerce recommendation dataset and a movie recommendation dataset) are used as examples to compare recommendation accuracy of the recommendation network provided in this embodiment of this application and that of an existing recommendation model in different diversity experiment settings (different diversity weights). FIG. 11 shows a comparison result. A difference between (a) and (b) in FIG. 11 lies in the different diversity weights, that is, $\lambda$ =0.5 in (a) and $\lambda$ =0.9 in (b). $\lambda$ represents diversity and accuracy weights in the experiment settings, and a larger value represents a lower diversity weight.

The recommendation network provided in this embodiment of this application may also be referred to as a re-ranking with personalized diversification (Re-ranking with personalized diversification, RAPID) model, and RAPID-det (as shown in FIG. 9A) and RAPID-pro (as shown in FIG. 9B) are two different implementations of the re-ranking scorer.

There are three types of existing recommendation models. A first type of recommendation model is a recommendation model that considers recommendation accuracy. A second type of recommendation model is a recommendation model that considers recommendation diversity. A third type of recommendation model is a recommendation model that considers recommendation personalization and recommendation diversity.

The first type of recommendation model (I for short) includes an initial sorting result (initial ranking, Init) with re-ranking not performed, a deep listwise context model (deep listwise context model, DLCM), a personalized re-ranking model (personalized re-ranking model, PRM), a set ranking model (SetRank), and a scope-aware re-ranking with gated attention model (scope-aware re-ranking with gated attention model, SRGA).

The second type of recommendation model (II for short) includes maximal marginal relevance (maximal marginal relevance, MMR), a determinantal point process (determinantal point process, DPP), a diversity encoder with self-attention (diversity encoder with self-attention, DESA), and sliding spectrum decomposition (sliding spectrum Decomposition, SSD).

The third type of recommendation model (III) includes adaptive maximal marginal relevance (adaptive maximal marginal relevance, adpMMR) and a personalized diversity for generating adversarial network (personalized diversity-promoting generative adversarial network, PD-GAN).

Evaluation indicators in FIG. 11 include a quantity of click times of first k items (click at k, click@k), a normalized cumulative loss gain of first k items (normalized discounted cumulative gain at k, ndcg@k), user satisfaction of first k items (satisfaction at k, satis@k), and diversity of first k items (diversity at k, div@k). k is 5 or 10. Larger values of the preceding evaluation indicators indicate better performance.

It can be seen from FIG. 11 that the RAPID model achieves optimal recommendation accuracy and optimal diversity compared with I and III. Although the existing type II model can achieve good diversity, recommendation precision of the model is greatly reduced and is not recommended in actual application because the recommendation accuracy is a main optimization objective of the recommendation system. In conclusion, the RAPID model provided in this embodiment of this application can achieve good recommendation accuracy and diversity at the same time.

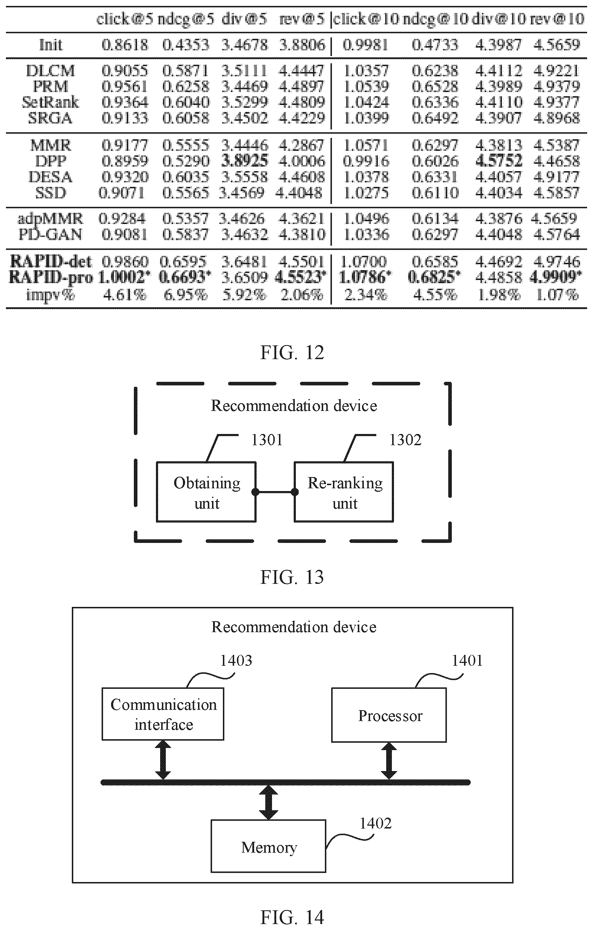

Similarly, comparison effect between the recommendation network provided in this embodiment of this application and the foregoing existing models is further verified in a private dataset. FIG. 12 shows the comparison effect. Recommendation revenue of first k items (revenue at k, rev@k) is added to the evaluation indicators, and directly corresponds to revenue that can be obtained by a platform recommendation. It can be learned that the RAPID model can achieve best effect under a plurality of indicators. For example, compared with the PRM which currently brings best re-ranking effect in the industry, the RAPID model improves recommendation benefits at top 5 and top 10 by 2.06% and 1.07%, respectively.

The foregoing describes the recommendation method in embodiments of this application. The following describes a recommendation device in embodiments of this application. Refer to FIG. 13. An embodiment of the recommendation device in embodiments of this application includes:

an obtaining unit 1301, configured to obtain a first sequence, where the first sequence represents preliminary recommendation ranking of a plurality of to-be-recommended items, where

the obtaining unit 1301 is further configured to obtain a plurality of first features based on the first sequence, where each of the plurality of first features represents an association relationship between a to-be-recommended item corresponding to each first feature and another to-be-recommended item;

the obtaining unit 1301 is further configured to obtain a second sequence, where the second sequence represents ranking of a plurality of historical items related to historical behavior of a user; and

the obtaining unit 1301 is further configured to obtain a second feature based on the second sequence, where the second feature represents a preference degree of the user for a category to which the plurality of historical items belong; and

a re-ranking unit 1302, configured to re-rank the first sequence based on the plurality of first features and the second feature to obtain a third sequence, where the third sequence is used to recommend an item to the user.

In this embodiment, operations performed by the units in the recommendation device are similar to those described in the embodiments shown in FIG. 4 to FIG. 12. Details are not described herein again.

In this embodiment, the obtaining unit 1301 obtains the ranking of the plurality of historical items related to the historical behavior of the user, and the re-ranking unit 1302 updates the preliminary recommendation ranking based on the second feature obtained based on the ranking of the plurality of historical items. Because the second feature reflects the preference degree of the user for the category to which the plurality of historical items belong, the third sequence determined based on the second feature can provide personalized and diversified item recommendation for the user.

FIG. 14 is a diagram of a structure of another recommendation device according to this application. The recommendation device may include a processor 1401, a memory 1402, and a communication port 1403. The processor 1401, the memory 1402, and the communication port 1403 are interconnected through a line. The processor 1401 is configured to perform control processing on an action of the recommendation device. The memory 1402 stores program instructions and data.

The memory 1402 stores program instructions and data that correspond to the steps performed by the recommendation device in the implementations corresponding to FIG. 4 to FIG. 12.

The processor 1401 is configured to perform the steps performed by the recommendation device in any one of the embodiments shown in FIG. 4 to FIG. 12.

In addition, the processor 1401 may be a central processing unit, a general-purpose processor, a digital signal processor, an application-specific integrated circuit, a field programmable gate array or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a combination of one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments. Details are not described herein again.

The communication port 1403 may be configured to receive and send data, and is configured to perform steps related to obtaining, sending, and receiving in any one of the embodiments shown in FIG. 4 to FIG. 12.

It should be noted that the recommendation device shown in FIG. 14 may be specifically configured to implement the functions of the steps performed by the recommendation device in the method embodiments corresponding to FIG. 4 to FIG. 12, and implement technical effects corresponding to the recommendation device. For a specific implementation of the recommendation device shown in FIG. 14, refer to descriptions in the method embodiments corresponding to FIG. 4 to FIG. 12. Details are not described herein again.

In an implementation, the recommendation device may include more or fewer components than those in FIG. 14. This is merely an example for description in this application, and is not limited.

An embodiment of this application further provides a computer-readable storage medium storing one or more computer executable instructions. When the computer executable instructions are executed by a processor, the processor performs the method in the possible implementations in the foregoing embodiments. The recommendation device may specifically perform the steps in the method embodiments corresponding to FIG. 4 to FIG. 12.

An embodiment of this application further provides a computer program product storing one or more computers. When the computer program product is executed by the processor, the processor performs the method in the foregoing possible implementations. The recommendation device may specifically perform the steps in the method embodiments corresponding to FIG. 4 to FIG. 12.

An embodiment of this application further provides a chip system. The chip system includes a processor, configured to support a recommendation device in implementing the functions of the recommendation device in the foregoing possible implementations. In a possible design, the chip system may further include a memory. The memory is configured to store program instructions and data that are necessary for the recommendation device. The chip system may include a chip, or may include a chip and another discrete device. The recommendation device may specifically perform the steps in the method embodiments corresponding to FIG. 4 to FIG. 12.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system,

**EP 4 621 603 A1**

apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or another form.

The units described as separate parts may or may not be physically separate, and parts displayed as units may or may not be physical units, may be located in one position, or may be distributed on a plurality of network units. Some or all of the units may be selected based on an actual requirement to achieve the objectives of the solutions of embodiments.

In addition, functional units in embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (ROM, read-only memory), a random access memory (RAM, random access memory), a magnetic disk, or an optical disc.

**Claims**

1.  A recommendation method, wherein the method comprises:

    obtaining a first sequence, wherein the first sequence represents preliminary recommendation ranking of a plurality of to-be-recommended items;
    obtaining a plurality of first features based on the first sequence, wherein each of the plurality of first features represents an association relationship between a to-be-recommended item corresponding to each first feature and another to-be-recommended item;
    obtaining a second sequence, wherein the second sequence represents ranking of a plurality of historical items related to historical behavior of a user;
    obtaining a second feature based on the second sequence, wherein the second feature represents a preference degree of the user for a category to which the plurality of historical items belong; and
    re-ranking the first sequence based on the plurality of first features and the second feature to obtain a third sequence, wherein the third sequence is used to recommend an item to the user.

2.  The method according to claim 1, wherein obtaining the second feature based on the second sequence comprises:

    splitting the second sequence into a plurality of subsequences based on the category of the plurality of historical items;
    obtaining a plurality of first subfeatures of the plurality of subsequences, wherein each of the plurality of first subfeatures represents an association relationship between at least two historical items in a subsequence corresponding to each first subfeature, and the plurality of subsequences one-to-one correspond to the plurality of first subfeatures;
    obtaining a plurality of second subfeatures based on the plurality of first subfeatures, wherein each of the plurality of second subfeatures represents an association relationship between a subsequence corresponding to each second subfeature and another subsequence, and the plurality of first subfeatures one-to-one correspond to the plurality of second subfeatures; and
    concatenating and performing dimension reduction processing on the plurality of second subfeatures to obtain the second feature.

3.  The method according to claim 1, wherein obtaining the second feature based on the second sequence comprises:

    obtaining a third feature based on the second sequence, wherein the third feature represents an association relationship between categories to which historical items in the second sequence belong; and
performing dimension reduction processing on the third feature to obtain the second feature.

4. The method according to any one of claims 1 to 3, wherein the method further comprises:

obtaining a plurality of fourth features of the plurality of to-be-recommended items, wherein the plurality of fourth features represent diversity of the plurality of to-be-recommended items, and the plurality of to-be-recommended items one-to-one correspond to the plurality of fourth features; and
re-ranking the first sequence based on the plurality of first features and the second feature to obtain the third sequence comprises:

obtaining a plurality of scores based on the plurality of first features, the second feature, and the plurality of fourth features, wherein the plurality of scores represent scores of re-ranking of the plurality of to-be-recommended items, and the plurality of scores one-to-one correspond to the plurality of to-be-recommended items; and
re-ranking the plurality of to-be-recommended items based on the plurality of scores to obtain the third sequence.

5. The method according to claim 4, wherein obtaining the plurality of scores based on the plurality of first features, the second feature, and the plurality of fourth features comprises:

obtaining a plurality of fifth features based on the second feature and the plurality of fourth features, wherein the plurality of fifth features represent personalized diversity features of the plurality of to-be-recommended items, and the plurality of fourth features one-to-one correspond to the plurality of fifth features; and
obtaining the plurality of scores based on the plurality of first features and the plurality of fifth features.

6. The method according to claim 5, wherein obtaining the plurality of scores based on the plurality of first features and the plurality of fifth features comprises:

concatenating the plurality of first features and the plurality of fifth features to obtain a plurality of sixth features, wherein the plurality of first features, the plurality of fifth features, and the plurality of sixth features one-to-one correspond to each other; and
performing dimension reduction processing on the plurality of sixth features to obtain the plurality of scores.

7. The method according to claim 5, wherein obtaining the plurality of scores based on the plurality of first features and the plurality of fifth features comprises:
performing point multiplication processing on the plurality of first features and the plurality of fifth features to obtain the plurality of scores.

8. A recommendation device, wherein the recommendation device comprises:

an obtaining unit, configured to obtain a first sequence, wherein the first sequence represents preliminary recommendation ranking of a plurality of to-be-recommended items, wherein
the obtaining unit is further configured to obtain a plurality of first features based on the first sequence, wherein each of the plurality of first features represents an association relationship between a to-be-recommended item corresponding to each first feature and another to-be-recommended item;
the obtaining unit is further configured to obtain a second sequence, wherein the second sequence represents ranking of a plurality of historical items related to historical behavior of a user; and
the obtaining unit is further configured to obtain a second feature based on the second sequence, wherein the second feature represents a preference degree of the user for a category to which the plurality of historical items belong; and
a re-ranking unit, configured to re-rank the first sequence based on the plurality of first features and the second feature to obtain a third sequence, wherein the third sequence is used to recommend an item to the user.

9. The device according to claim 8, wherein the obtaining unit is specifically configured to split the second sequence into a plurality of subsequences based on the category of the plurality of historical items;

the obtaining unit is specifically configured to obtain a plurality of first subfeatures of the plurality of subsequences, wherein each of the plurality of first subfeatures represents an association relationship between at least two historical items in a subsequence corresponding to each first subfeature, and the plurality of subsequences one-to-one correspond to the plurality of first subfeatures;

the obtaining unit is specifically configured to obtain a plurality of second subfeatures based on the plurality of first subfeatures, wherein each of the plurality of second subfeatures represents an association relationship between a subsequence corresponding to each second subfeature and another subsequence, and the plurality of first subfeatures one-to-one correspond to the plurality of second subfeatures; and

the obtaining unit is specifically configured to concatenate and perform dimension reduction processing on the plurality of second subfeatures to obtain the second feature.

10. The device according to claim 8, wherein the obtaining unit is specifically configured to obtain a third feature based on the second sequence, wherein the third feature represents an association relationship between categories to which historical items in the second sequence belong; and

the obtaining unit is specifically configured to perform dimension reduction processing on the third feature to obtain the second feature.

11. The device according to any one of claims 8 to 10, wherein the obtaining unit is further configured to obtain a plurality of fourth features of the plurality of to-be-recommended items, wherein the plurality of fourth features represent diversity of the plurality of to-be-recommended items, and the plurality of to-be-recommended items one-to-one correspond to the plurality of fourth features;

the re-ranking unit is specifically configured to obtain a plurality of scores based on the plurality of first features, the second feature, and the plurality of fourth features, wherein the plurality of scores represent scores of re-ranking of the plurality of to-be-recommended items, and the plurality of scores one-to-one correspond to the plurality of to-be-recommended items; and

the re-ranking unit is specifically configured to re-rank the plurality of to-be-recommended items based on the plurality of scores to obtain the third sequence.

12. The device according to claim 11, wherein the re-ranking unit is specifically configured to obtain a plurality of fifth features based on the second feature and the plurality of fourth features, wherein the plurality of fifth features represent personalized diversity features of the plurality of to-be-recommended items, and the plurality of fourth features one-to-one correspond to the plurality of fifth features; and

the re-ranking unit is specifically configured to obtain the plurality of scores based on the plurality of first features and the plurality of fifth features.

13. The device according to claim 12, wherein the re-ranking unit is specifically configured to concatenate the plurality of first features and the plurality of fifth features to obtain a plurality of sixth features, wherein the plurality of first features, the plurality of fifth features, and the plurality of sixth features one-to-one correspond to each other; and

the re-ranking unit is specifically configured to perform dimension reduction processing on the plurality of sixth features to obtain the plurality of scores.

14. The device according to claim 12, wherein the re-ranking unit is specifically configured to perform point multiplication processing on the plurality of first features and the plurality of fifth features to obtain the plurality of scores.

15. A recommendation device, comprising a processor, wherein the processor is coupled to a memory, the memory is configured to store a computer program or instructions, and the processor is configured to execute the computer program or the instructions in the memory, to enable the method according to any one of claims 1 to 7 to be performed.

16. A chip, wherein the chip comprises a processor and a communication interface, the communication interface is coupled to the processor, and the processor is configured to run a computer program or instructions, to enable the method according to any one of claims 1 to 7 to be performed.

17. A computer storage medium, wherein the computer storage medium stores instructions, and when the instructions are executed on a computer, the computer is enabled to perform the method according to any one of claims 1 to 7.

18. A computer program product, wherein when the computer program product is executed on a computer, the computer is enabled to perform the method according to any one of claims 1 to 7.

FIG. 1

FIG. 2

Neural network processor 20

Host CPU

External memory

Bus interface unit 210

Instruction fetch buffer 209

Controller 204

Weight memory 202

Operation circuit 203

Accumulator 208

Input memory 201

Vector computing unit 207

Unified memory 206

Direct memory access controller 205

Interaction interface

Input data, recommendation result, and recommendation network

Search/Inference/ Decision-making

Data training/Machine learning/ Deep learning

Processor

Memory

Data processing device (server)

13:21

FIG. 3A

FIG. 3B

403 Re-ranking scorer

401 Relevance estimator

402 Diversity estimator

Recommendation result

Initial ranking list including L items

User's historical sequence including M items

User

FIG. 4

Obtain a first sequence — 501

Obtain a plurality of first features based on the first sequence — 502

Obtain a second sequence — 503

Obtain a second feature based on the second sequence — 504

Re-rank the first sequence based on the plurality of first features and the second feature to obtain the third sequence — 505

FIG. 5

FIG. 6

Split a second sequence into a plurality of subsequences based on a category of a plurality of historical items ⎯ 701

Obtain a plurality of first subfeatures of the plurality of subsequences ⎯ 702

Obtain a plurality of second subfeatures based on the plurality of first subfeatures ⎯ 703

Concatenate and perform dimension reduction processing on the plurality of second subfeatures to obtain a second feature ⎯ 704

FIG. 7

A plurality of second subfeatures

A plurality of first subfeatures

A plurality of subsequences

Second feature

Concatenation and dimension reduction

Self-attention mechanism

A plurality of LSTMs

FIG. 8

FIG. 9A

FIG. 9B

FIG. 10

EP 4 621 603 A1

EP 4 621 603 A1

(a) $\lambda = 0.5$

| | E-commerce recommendation dataset | | | | | | | | Movie recommendation dataset | | | | | | | |
|---|---|---|---|---|---|---|---|---|---|---|---|---|---|---|---|---|
| | click@5 | ndcg@5 | div@5 | satis@5 | click@10 | ndcg@10 | div@10 | satis@10 | click@5 | ndcg@5 | div@5 | satis@5 | click@10 | ndcg@10 | div@10 | satis@10 |
| Init | 1.2358 | 0.3924 | 3.0807 | 0.2215 | 1.8793 | 0.4833 | 4.2193 | 0.1664 | 1.8412 | 0.4936 | 5.6425 | 0.3190 | 2.3379 | 0.5383 | 7.1999 | 0.2743 |
| DLCM | 1.7271 | 0.4742 | 3.2389 | 0.2972 | 2.3944 | 0.5788 | 4.3222 | 0.2043 | 2.0877 | 0.5406 | 6.4529 | 0.3543 | 2.6476 | 0.5892 | 8.0529 | 0.3048 |
| PRM | 1.7900 | 0.4828 | 3.1775 | 0.3064 | 2.4485 | 0.5876 | 4.2697 | 0.2079 | 2.0911 | 0.5267 | 6.2818 | 0.3550 | 2.6560 | 0.5775 | 7.8888 | 0.3057 |
| SetRank | 1.6935 | 0.4553 | 3.1826 | 0.2925 | 2.2972 | 0.5629 | 4.2621 | 0.1963 | 2.0630 | 0.5185 | 6.2412 | 0.3511 | 2.6291 | 0.5692 | 7.8875 | 0.3032 |
| SRGA | 1.7801 | 0.5013 | 3.1874 | 0.3052 | 2.4890 | 0.6109 | 4.2915 | 0.2117 | 2.0814 | 0.5228 | 6.3382 | 0.3536 | 2.6448 | 0.5737 | 7.9638 | 0.3046 |
| MMR | 1.2560 | 0.4100 | 3.2464 | 0.2247 | 1.8938 | 0.5048 | 4.2611 | 0.1674 | 1.8575 | 0.4857 | 5.8207 | 0.3214 | 2.3455 | 0.5280 | 7.3301 | 0.2750 |
| DPP | 1.3326 | 0.4259 | **4.1645** | 0.2377 | 1.8732 | 0.5023 | **4.5851** | 0.1645 | 1.9458 | 0.5065 | 6.4568 | 0.3342 | 2.4378 | 0.5480 | **8.3408** | 0.2846 |
| DESA | 1.7479 | 0.4745 | 3.1903 | 0.3002 | 2.4121 | 0.5794 | 4.2841 | 0.2055 | 2.0707 | 0.5253 | 6.2853 | 0.3521 | 2.6374 | 0.5754 | 7.9044 | 0.3039 |
| SSD | 1.1988 | 0.3296 | 3.1513 | 0.2156 | 1.8433 | 0.4214 | 4.2822 | 0.1638 | 1.8135 | 0.3888 | 5.7663 | 0.3151 | 2.3127 | 0.4397 | 7.3705 | 0.2717 |
| adpMMR | 1.2408 | 0.3962 | 3.1179 | 0.2221 | 1.8802 | 0.4852 | 4.2471 | 0.1663 | 1.844 | 0.4924 | 5.6663 | 0.3194 | 2.3385 | 0.5358 | 7.2139 | 0.2744 |
| PD-GAN | 1.2478 | 0.4072 | 3.1092 | 0.2235 | 1.8919 | 0.5009 | 4.3134 | 0.1674 | 1.8601 | 0.4901 | 5.9314 | 0.3287 | 2.6307 | 0.5640 | 8.0515 | 0.2806 |
| **RAPID-det** | 1.8323 | 0.5082 | 3.2356 | 0.3134 | **2.5551\*** | **0.6214\*** | 4.327 | **0.2167\*** | 2.0981 | 0.5423 | 6.4644 | 0.3558 | 2.6591 | 0.5899 | 8.0709 | 0.3059 |
| **RAPID-pro** | **1.8358\*** | **0.5102\*** | 3.2265 | **0.3135\*** | 2.5110 | 0.6149 | 4.3130 | 0.2127 | **2.1071\*** | **0.5442\*** | **6.5210\*** | **0.3570\*** | **2.6648\*** | **0.5928\*** | 8.1261 | **0.3064\*** |

(b) $\lambda = 0.9$

| | E-commerce recommendation dataset | | | | | | | | Movie recommendation dataset | | | | | | | |
|---|---|---|---|---|---|---|---|---|---|---|---|---|---|---|---|---|
| | click@5 | ndcg@5 | div@5 | satis@5 | click@10 | ndcg@10 | div@10 | satis@10 | click@5 | ndcg@5 | div@5 | satis@5 | click@10 | ndcg@10 | div@10 | satis@10 |
| Init | 1.2648 | 0.3248 | 3.0807 | 0.2256 | 2.1741 | 0.4254 | 4.2193 | 0.1928 | 1.7972 | 0.4067 | 5.6412 | 0.3103 | 2.4889 | 0.4418 | 7.1997 | 0.2871 |
| DLCM | 2.5170 | 0.6640 | 3.1926 | 0.4048 | 3.4267 | 0.7557 | 4.2718 | 0.2774 | 2.2393 | 0.4871 | 5.8975 | 0.3736 | 3.0700 | 0.5324 | 7.5226 | 0.3428 |
| PRM | 2.5965 | 0.6918 | 3.1957 | 0.4147 | 3.4878 | 0.7798 | 4.2704 | 0.2809 | 2.2408 | 0.4874 | 5.8957 | 0.3737 | 3.0715 | 0.5325 | 7.5191 | 0.3430 |
| SetRank | 2.3785 | 0.6152 | 3.1870 | 0.3893 | 3.3416 | 0.7159 | 4.2706 | 0.2731 | 2.2401 | 0.4820 | 5.8967 | 0.3738 | 3.0700 | 0.5273 | 7.5221 | 0.3428 |
| SRGA | 2.5803 | 0.6949 | 3.1925 | 0.4132 | 3.5103 | 0.7873 | 4.2719 | 0.2831 | 2.2425 | 0.4856 | 5.8992 | 0.3740 | 3.0716 | 0.5304 | 7.5195 | 0.3429 |
| MMR | 1.2636 | 0.3264 | 3.2439 | 0.2256 | 2.1824 | 0.4302 | 4.2708 | 0.1937 | 1.8005 | 0.4060 | 5.7282 | 0.3108 | 2.4905 | 0.4415 | 7.2514 | 0.2873 |
| DPP | 1.2109 | 0.3188 | **4.1641** | 0.2174 | 2.0838 | 0.4164 | **4.5847** | 0.1858 | 1.8077 | 0.4052 | **6.4558** | 0.3119 | 2.4959 | 0.4406 | **8.3398** | 0.2879 |
| DESA | 2.5292 | 0.6732 | 3.1915 | 0.4060 | 3.4341 | 0.7636 | 4.2724 | 0.2778 | 1.9935 | 0.4357 | 5.9985 | 0.3391 | 2.7671 | 0.4775 | 7.6097 | 0.3144 |
| SSD | 1.2174 | 0.3059 | 3.1434 | 0.2183 | 2.1156 | 0.4071 | 4.2766 | 0.1887 | 1.6715 | 0.3544 | 5.6804 | 0.2915 | 2.3710 | 0.3954 | 7.2746 | 0.2750 |
| adpMMR | 1.2649 | 0.3255 | 3.1179 | 0.2256 | 2.1739 | 0.4261 | 4.2271 | 0.1928 | 1.7982 | 0.4053 | 5.6663 | 0.3105 | 2.4887 | 0.4409 | 7.2139 | 0.2871 |
| PD-GAN | 1.2814 | 0.3338 | 3.0978 | 0.2280 | 2.2038 | 0.4350 | 4.3162 | 0.1953 | 1.8090 | 0.4098 | 5.6617 | 0.3121 | 3.0015 | 0.4792 | 8.2334 | 0.2743 |
| **RAPID-det** | 2.6571 | 0.7077 | 3.1899 | 0.4227 | 3.5668 | 0.7969 | 4.2726 | **0.2862\*** | 2.2433 | 0.4878 | 5.9062 | 0.3741 | 3.0752 | 0.5336 | 7.5222 | 0.3431 |
| **RAPID-pro** | **2.6575\*** | **0.7084\*** | 3.1966 | **0.4228\*** | **3.5680\*** | **0.7976\*** | 4.2770 | **0.2862\*** | **2.2457** | **0.4882** | 5.9103 | **0.3745\*** | **3.0761\*** | **0.5332** | 7.5240 | **0.3432\*** |

FIG. 11

| | click@5 | ndcg@5 | div@5 | rev@5 | click@10 | ndcg@10 | div@10 | rev@10 |
|---|---|---|---|---|---|---|---|---|
| Init | 0.8618 | 0.4353 | 3.4678 | 3.8806 | 0.9981 | 0.4733 | 4.3987 | 4.5659 |
| DLCM | 0.9055 | 0.5871 | 3.5111 | 4.4447 | 1.0357 | 0.6238 | 4.4112 | 4.9221 |
| PRM | 0.9561 | 0.6258 | 3.4469 | 4.4897 | 1.0539 | 0.6528 | 4.3989 | 4.9379 |
| SetRank | 0.9364 | 0.6040 | 3.5299 | 4.4809 | 1.0424 | 0.6336 | 4.4110 | 4.9377 |
| SRGA | 0.9133 | 0.6058 | 3.4502 | 4.4229 | 1.0399 | 0.6492 | 4.3907 | 4.8968 |
| MMR | 0.9177 | 0.5555 | 3.4446 | 4.2867 | 1.0571 | 0.6297 | 4.3813 | 4.5387 |
| DPP | 0.8959 | 0.5290 | **3.8925** | 4.0006 | 0.9916 | 0.6026 | **4.5752** | 4.4658 |
| DESA | 0.9320 | 0.6035 | 3.5558 | 4.4608 | 1.0378 | 0.6331 | 4.4057 | 4.9177 |
| SSD | 0.9071 | 0.5565 | 3.4569 | 4.4048 | 1.0275 | 0.6110 | 4.4034 | 4.5857 |
| adpMMR | 0.9284 | 0.5357 | 3.4626 | 4.3621 | 1.0496 | 0.6134 | 4.3876 | 4.5659 |
| PD-GAN | 0.9081 | 0.5837 | 3.4632 | 4.3810 | 1.0336 | 0.6297 | 4.4048 | 4.5764 |
| **RAPID-det** | 0.9860 | 0.6595 | 3.6481 | 4.5501 | 1.0700 | 0.6585 | 4.4692 | 4.9746 |
| **RAPID-pro** | **1.0002*** | **0.6693*** | 3.6509 | **4.5523*** | **1.0786*** | **0.6825*** | 4.4858 | **4.9909*** |
| impv% | 4.61% | 6.95% | 5.92% | 2.06% | 2.34% | 4.55% | 1.98% | 1.07% |

FIG. 12

FIG. 13

FIG. 14

## INTERNATIONAL SEARCH REPORT

| | International application No. |
|---|---|
| | **PCT/CN2023/139738** |

| A. | CLASSIFICATION OF SUBJECT MATTER |
|---|---|

G06F 16/9535(2019.01)i

According to International Patent Classification (IPC) or to both national classification and IPC

| B. | FIELDS SEARCHED |
|---|---|

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

VEN, CNABS, CNTXT, WOTXT, USTXT, CNKI, IEEE: 商品, 物品, 推荐, 历史行为, 喜好, 子特征, 初始推荐列表, 重排序, 评分, good?, item?, recommend+, historical behavior, rearrangement

| C. | DOCUMENTS CONSIDERED TO BE RELEVANT |
|---|---|

| Category* | Citation of document, with indication, where appropriate, of the relevant passages | Relevant to claim No. |
|---|---|---|
| PX | CN 116108267 A (HUAWEI TECHNOLOGIES CO., LTD.) 12 May 2023 (2023-05-12) claims 1-18 | 1-18 |
| Y | CN 111325609 A (JD DIGITS TECHNOLOGY HOLDING CO., LTD.) 23 June 2020 (2020-06-23) description, paragraphs 49-50 and 59-101, and figure 1 | 1-18 |
| Y | CN 114637920 A (ALIBABA (CHINA) CO., LTD.) 17 June 2022 (2022-06-17) description, paragraphs 91-188, and figure 1 | 1-18 |
| Y | CN 109376307 A (BAIDU ONLINE NETWORK TECHNOLOGY (BEIJING) CO., LTD.) 22 February 2019 (2019-02-22) description, paragraphs 68-118, and figure 2 | 4-7, 11-14 |
| A | CN 111008278 A (XIAMEN MEIYOU CO., LTD.) 14 April 2020 (2020-04-14) entire document | 1-18 |
| A | CN 111400613 A (SUNING FINANCE TECHNOLOGY (NANJING) CO., LTD.) 10 July 2020 (2020-07-10) entire document | 1-18 |

☑ Further documents are listed in the continuation of Box C. ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **04 March 2024** | **11 March 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/139738**

| C. | DOCUMENTS CONSIDERED TO BE RELEVANT | |
|---|---|---|
| Category* | Citation of document, with indication, where appropriate, of the relevant passages | Relevant to claim No. |
| A | CN 114691973 A (HUAWEI TECHNOLOGIES CO., LTD.) 01 July 2022 (2022-07-01)<br>entire document | 1-18 |
| A | US 2020134696 A1 (AMADEUS S.A.S.) 30 April 2020 (2020-04-30)<br>entire document | 1-18 |

Form PCT/ISA/210 (second sheet) (July 2022)

INTERNATIONAL SEARCH REPORT
Information on patent family members

| | | | | | | | | | |
|---|---|---|---|---|---|---|---|---|---|

**INTERNATIONAL SEARCH REPORT**
**Information on patent family members**

International application No.

**PCT/CN2023/139738**

| Patent document cited in search report | | | Publication date (day/month/year) | Patent family member(s) | | | Publication date (day/month/year) |
|---|---|---|---|---|---|---|---|
| CN | 116108267 | A | 12 May 2023 | None | | | |
| CN | 111325609 | A | 23 June 2020 | None | | | |
| CN | 114637920 | A | 17 June 2022 | None | | | |
| CN | 109376307 | A | 22 February 2019 | None | | | |
| CN | 111008278 | A | 14 April 2020 | None | | | |
| CN | 111400613 | A | 10 July 2020 | None | | | |
| CN | 114691973 | A | 01 July 2022 | None | | | |
| US | 2020134696 | A1 | 30 April 2020 | FR | 3087921 | A1 | 01 May 2020 |
| | | | | EP | 3648041 | A1 | 06 May 2020 |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211634087